(19)

Europäisches
Patentamt
European
Patent Office
Office européen
des brevets

(11) **EP 4 625 856 A1**

(12) **EUROPEAN PATENT APPLICATION**
published in accordance with Art. 153(4) EPC

(43) Date of publication:
**01.10.2025 Bulletin 2025/40**

(21) Application number: **23902639.6**

(22) Date of filing: **11.12.2023**

(51) International Patent Classification (IPC):
***H04L 1/00*** (2006.01)

(52) Cooperative Patent Classification (CPC):
**H04L 1/00**

(86) International application number:
**PCT/CN2023/137824**

(87) International publication number:
**WO 2024/125443 (20.06.2024 Gazette 2024/25)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **12.12.2022 CN 202211591696**

(71) Applicant: **Huawei Technologies Co., Ltd.
Shenzhen, Guangdong 518129 (CN)**

(72) Inventors:
• **HUANG, Kechao
Shenzhen, Guangdong 518129 (CN)**

• **YAN, Zengchao
Shenzhen, Guangdong 518129 (CN)**
• **YANG, Xiaoling
Shenzhen, Guangdong 518129 (CN)**
• **HUANG, Qinhui
Shenzhen, Guangdong 518129 (CN)**
• **MA, Huixiao
Shenzhen, Guangdong 518129 (CN)**

(74) Representative: **Isarpatent
Patent- und Rechtsanwälte
Barth Hassa Peckmann & Partner mbB
Friedrichstraße 31
80801 München (DE)**

(54) **DATA PROCESSING METHOD AND DATA PROCESSING APPARATUS**

(57) This application discloses a data processing method and a data processing apparatus. First, W virtual bits are periodically inserted into a first data stream obtained through first FEC encoding to obtain a second data stream, where each second data stream includes at least one first bit sequence, the first bit sequence includes L=P+W bits, the P bits are from the first data stream, and the W bits are padded virtual bits. Then, second FEC encoding is performed on the second data stream to obtain a third data stream, where a second bit sequence is obtained by performing second FEC encoding on each first bit sequence, and the second bit sequence includes b codewords. Next, W virtual bits in each second bit sequence of the third data stream are deleted to obtain a fourth data stream. Then, processing including modulation is performed on m fourth data streams to obtain Y modulated symbol streams, where m is an integer greater than **1,** and a value of a baud rate of each modulated symbol stream is an integer multiple of a value of a reference clock frequency.

FIG. 6

## Description

This application claims priority to Chinese Patent Application No. CN202211591696.0, filed with the China National Intellectual Property Administration on December 12, 2022 and entitled "DATA PROCESSING METHOD AND DATA PROCESSING APPARATUS", which is incorporated herein by reference in its entirety.

## TECHNICAL FIELD

This application relates to the communication field, and in particular, to a data processing method and a data processing apparatus.

## BACKGROUND

Continuously driven by 5G, cloud computing, big data, artificial intelligence, and the like, Ethernet networks are developing toward larger capacities, higher rates, and lower latencies. Error correction is performed on transmitted data through forward error correction (forward error correction, FEC) encoding, so that transmission of bit errors can be eliminated, and original data sent by a transmitter can be recovered from received data.

Currently, a concatenated FEC transmission solution is provided, and a transmitter device and a transmitter processing module are connected through an attachment unit interface (attachment unit interface, AUI). The transmitter device performs first FEC encoding on to-be-transmitted data, and sends, to the transmitter processing module, data obtained through the first FEC encoding. The transmitter processing module performs second FEC encoding on the data obtained through the first FEC encoding, performs modulation and mapping on a bit sequence obtained through the second FEC encoding, to generate a corresponding modulated symbol sequence, and finally transmits the generated modulated symbol sequence to a receiver through an optical fiber. A data stream received by the receiver is asynchronous and has noise. Usually, phase locked loop (Phase Locked Loop, PLL)-based clock and data recovery (Clock and Data Recovery, CDR) is performed. To be specific, a clock is extracted from data, and the data is "retimed" to remove jitter incurring in a transmission process. Then, demodulation and decoding are performed to recover the original data sent by a transmitter. However, in the existing solution, implementation of a PLL circuit used for performing CDR by the receiver is complex, and PLL jitter is high.

## SUMMARY

Embodiments of this application provide a data processing method and a data processing apparatus, to simplify clock extraction and synchronization manners of a receiver, implement fast phase locking, and achieve low PLL complexity and low jitter; and also simplify frame synchronization, inner codeword synchronization, and other operations of the receiver, and achieve low implementation complexity.

According to a first aspect, an embodiment of this application provides a data processing method. The method is applied to a transmitter, and includes the following steps. First, first data processing is separately performed on m first data streams obtained through first FEC encoding to obtain m second data streams. m is an integer greater than 1, each second data stream includes at least one first bit sequence, the first bit sequence includes L bits, P bits in the first bit sequence are from the first data stream, W bits in the first bit sequence are padded virtual bits, W is an integer greater than or equal to 1, and L=P+W. Subsequently, second FEC encoding is separately performed on the m second data streams to obtain m third data streams. Each third data stream includes at least one second bit sequence, each second bit sequence is obtained by performing second FEC encoding on the first bit sequence, the second bit sequence includes b codewords, b is an integer greater than 1, each codeword includes N bits, N=K+S, K represents a quantity of information bits in the codeword, S represents a quantity of parity bits in the codeword, K is an integer greater than or equal to 1, S is an integer greater than or equal to 1, and L=K×b. Next, second data processing is separately performed on the m third data streams to obtain m fourth data streams. Each fourth data stream includes at least one third bit sequence, each third bit sequence is obtained by performing second data processing on the second bit sequence, the third bit sequence includes M remaining bits other than the virtual bits in the second bit sequence, and M=N×b-W. Then, third data processing is performed on the m fourth data streams to obtain Y modulated symbol streams, where Y is an integer greater than or equal to 1, the third data processing includes modulation, and a value of a baud rate of each modulated symbol stream is an integer multiple of a value of a reference clock frequency.

In this implementation, a virtual bit is periodically inserted (periodically insert) into a data stream obtained through first FEC encoding (that is, outer-code encoding), then second FEC encoding (that is, inner-code encoding) is performed, and then the inserted virtual bit is deleted. Specifically, P bits are periodically obtained from the outer-code encoded data stream, and W virtual bits are inserted, so that there are W virtual bits in every L bits in a to-be-encoded data stream, where L=P+W. The inserted virtual bits are deleted after the second FEC encoding (that is, the inner-code encoding) is performed on the to-be-encoded data stream. Positive integers P and W are selected, to cause the value of the baud rate of the modulated symbol data stream to be an integer multiple of an Ethernet common reference clock (Ethernet common reference clock) frequency. This simplifies clock extraction and synchronization manners of a receiver, implements fast phase locking, and achieves low PLL complexity and low jitter. In addition, the positive integers P and W are further selected. After the receiver performs frame synchronization (that is, frame synchronization of M = N × b - W bits) on received data, inner codeword synchronization can be ensured. This simplifies operations such as the frame synchronization and the inner codeword synchronization of the receiver, and achieves low implementation complexity.

In some possible implementations, the value of the baud rate of each modulated symbol stream is an integer multiple of 156.25M.

In some possible implementations, b and W satisfy the following relationship:

$$\frac{425}{4} \times \frac{b \times N - W}{b \times K - W} G = a \times \varphi M$$, where a is an integer greater than or equal to 1, $\varphi$ represents the value of the reference clock frequency, G represents 10^9, and M represents 10^6.

In some possible implementations, N=128 and K=120. Hamming (128,120) is used for the second FEC encoding. Alternatively, the second FEC encoding is performing bitwise exclusive OR on every two consecutive information bits in K=120 information bits to obtain 60 bits, and performing Hamming (68,60) encoding on the 60 bits to obtain S=8 parity bits, where a codeword with a length of 128 bits that is obtained through the second FEC encoding includes the K=120 information bits and the S=8 parity bits.

In some possible implementations, W is an integer multiple of 10. $W=\frac{40 \times b}{23}$, $W=\frac{200 \times b}{47}$, $W=\frac{20 \times b}{3}$, or $W=\frac{440 \times b}{49}$.

In some possible implementations, N=148 and K=140. Hamming (148,140) is used for the second FEC encoding. Alternatively, the second FEC encoding is performing bitwise exclusive OR on every two consecutive information bits in K=140 information bits to obtain 70 bits, and performing Hamming (78,70) encoding on the 70 bits to obtain S=8 parity bits, where a codeword with a length of 148 bits that is obtained through the second FEC encoding includes the K=140 information bits and the S=8 parity bits.

In some possible implementations, $W=4 \times b$, $W=\frac{220 \times b}{21}$, $W=\frac{180 \times b}{11}$, $W=\frac{500 \times b}{23}$ or $W=\frac{80 \times b}{3}$.

In some possible implementations, at least one of the following operations is further performed on the m first data streams: alignment marker lock, lane de-skew, and lane reorder.

In some possible implementations, convolutional interleaving has been performed on the m first data streams before the first data processing is performed, or convolutional interleaving has been performed on the m second data streams before the second FEC encoding is performed. The convolutional interleaving includes delaying an input data stream based on r delay lines, where r is an integer greater than 1, each delay line includes a different quantity of storage units, a delay line having a smallest quantity of storage units includes 0 storage units, a difference between quantities of storage units of every two adjacent delay lines is Q, each storage unit is configured to store d bits, bits in the input data stream are sequentially input into the r delay lines based on sequence numbers of the r delay lines, d bits are input into and output from each delay line for a single time, r*d consecutive bits in a data stream output through the convolutional interleaving include the d bits output from each delay line, Q is an integer greater than or equal to 1, and d is an integer multiple of 10.

In some possible implementations, input and output switches corresponding to the convolutional interleaving are in a 0^th delay line each time f bits are output through the convolutional interleaving, where K×b is divisible by f. Alternatively, input and output switches corresponding to the convolutional interleaving are in a 0^th delay line each time f bits are output through the convolutional interleaving, where P is divisible by f.

In some possible implementations, r×d×c=K×b, and c is an integer greater than or equal to 1. Alternatively, r×d×c=P, and c is an integer greater than or equal to 1.

According to a second aspect, an embodiment of this application provides a data processing method. The method is applied to a receiver, and includes the following steps. First, fourth data processing is performed on received Y modulated symbol streams to obtain m fifth data streams. Each fifth data stream is obtained through demodulation, Y is an integer greater than or equal to 1, the Y modulated symbol streams are obtained by performing third data processing on m fourth data streams, the third data processing includes modulation, the m fourth data streams are obtained by separately performing second data processing on m third data streams, the m third data streams are obtained by separately performing second FEC encoding on m second data streams, the m second data streams are obtained by separately performing first data processing on m first data streams obtained through first FEC encoding, and m is an integer greater than 1. Each second data stream includes at least one first bit sequence, the first bit sequence includes L bits, P bits in the first bit sequence are from the first data stream, W bits in the first bit sequence are padded virtual bits, W is an integer greater than or equal to 1, and L=P+W. Each third data stream includes at least one second bit sequence, each second bit sequence is obtained by performing second FEC encoding on the first bit sequence, the second bit sequence includes b codewords, b is an integer greater than 1, each codeword includes N bits, N=K+S, K represents a quantity of information bits in the codeword, S represents a quantity of parity bits in the codeword, K is an integer greater than or equal to 1, S is an integer greater than or equal to 1, and L=K×b. Each fourth data stream includes at least one third bit sequence, each third bit sequence is obtained by performing second data processing on the second bit sequence, the third bit sequence includes M remaining bits other than the virtual bits in the second bit sequence, and M=N×b-W. A value of a baud rate of each modulated symbol stream is an integer multiple of a value of a reference clock frequency. Then, frame synchronization is separately performed on the m fifth data streams.

In some possible implementations, the value of the baud rate of each modulated symbol stream is an integer multiple of 156.25M.

In some possible implementations, b and W satisfy the following relationship:

$$\frac{425}{4} \times \frac{b \times N - W}{b \times K - W} G = a \times \varphi M$$ , where a is an integer greater than or equal to 1, $\varphi$ represents the value of the reference clock frequency, G represents 10^9, and M represents 10^6.

In some possible implementations, N=128 and K=120. Hamming (128,120) is used for the second FEC encoding. Alternatively, the second FEC encoding is performing bitwise exclusive OR on every two consecutive information bits in K=120 information bits to obtain 60 bits, and performing Hamming (68,60) encoding on the 60 bits to obtain S=8 parity bits, where a codeword with a length of 128 bits that is obtained through the second FEC encoding includes the K=120 information bits and the S=8 parity bits.

In some possible implementations, W is an integer multiple of 10. $W=\frac{40 \times b}{23}$, $W=\frac{200 \times b}{47}$, $W=\frac{20 \times b}{3}$ , or

$W=\frac{440 \times b}{49}$ .

In some possible implementations, N=148 and K=140. Hamming (148,140) is used for the second FEC encoding. Alternatively, the second FEC encoding is performing bitwise exclusive OR on every two consecutive information bits in K=140 information bits to obtain 70 bits, and performing Hamming (78,70) encoding on the 70 bits to obtain S=8 parity bits, where a codeword with a length of 148 bits that is obtained through the second FEC encoding includes the K=140 information bits and the S=8 parity bits.

In some possible implementations, $W=4 \times b$, $W=\frac{220 \times b}{21}$, $W=\frac{180 \times b}{11}$, $W=\frac{500 \times b}{23}$ , or $W=\frac{80 \times b}{3}$ .

In some possible implementations, at least one of the following operations is further performed on the m first data streams: alignment marker lock, lane de-skew, and lane reorder.

In some possible implementations, convolutional interleaving has been performed on the m first data streams before the first data processing is performed, or convolutional interleaving has been performed on the m second data streams before the second FEC encoding is performed. The convolutional interleaving includes delaying an input data stream based on r delay lines, where r is an integer greater than 1, each delay line includes a different quantity of storage units, a delay line having a smallest quantity of storage units includes 0 storage units, a difference between quantities of storage units of every two adjacent delay lines is Q, each storage unit is configured to store d bits, bits in the input data stream are sequentially input into the r delay lines based on sequence numbers of the r delay lines, d bits are input into and output from each delay line for a single time, r*d consecutive bits in a data stream output through the convolutional interleaving include the d bits output from each delay line, Q is an integer greater than or equal to 1, and d is an integer multiple of 10.

In some possible implementations, input and output switches corresponding to the convolutional interleaving are in a 0th delay line each time f bits are output through the convolutional interleaving, where K×b is divisible by f. Alternatively, input and output switches corresponding to the convolutional interleaving are in a 0th delay line each time f bits are output through the convolutional interleaving, where P is divisible by f.

In some possible implementations, r×d×c=K×b, and c is an integer greater than or equal to 1. Alternatively, r×d×c=P, and c is an integer greater than or equal to 1.

According to a third aspect, an embodiment of this application provides a data processing method. The method is applied to a transmitter, and includes the following steps. First, second FEC encoding is separately performed on m first data streams obtained through first FEC encoding to obtain m second data streams. m is an integer greater than 1, the first data stream includes at least one first bit sequence, the second data stream includes at least one second bit sequence, each second bit sequence is obtained by performing second FEC encoding on the first bit sequence, the second bit sequence includes b codewords, b is an integer greater than 1, each codeword includes N bits, N=K+S, K represents a quantity of information bits in the codeword, S represents a quantity of parity bits in the codeword, K is an integer greater than or equal to 1, S is an integer greater than or equal to 1, the first bit sequence includes K×b bits, and the second bit sequence includes N×b bits. Subsequently, first data processing is separately performed on the m second data streams to obtain m third data streams. The third data stream includes at least one third bit sequence, each third bit sequence is obtained by performing first data processing on the second bit sequence, the third bit sequence includes H bits in the second bit sequence, H=N×b-F, and F is an integer greater than or equal to 1. Then, second data processing is performed on the m third data streams to obtain Y modulated symbol streams. Y is an integer greater than or equal to 1, the second data processing includes modulation, and a value of a baud rate of each modulated symbol stream is an integer multiple of a value of a reference clock frequency.

In this implementation, inner-code encoding is first performed on a data stream, and then a part of bits are deleted after the inner-code encoding, to obtain a modulated symbol stream through modulation. An operation of deleting the part of bits may be referred to as a puncturing (puncturing) operation. A puncturing manner for a codeword combination block provided in this application is compatible with an existing convolutional interleaver design and an existing encoding design, and satisfies a requirement that the baud rate of the modulated symbol stream is the integer multiple of the reference clock frequency. In this way, a PLL design is simple, receiver synchronization is simple, and the convolutional interleaver design is also simple, so that clock recovery complexity is reduced while maximum compatibility can be achieved on the whole.

In some possible implementations, the value of the baud rate of each modulated symbol stream is an integer multiple of 156.25M.

In some possible implementations, band F satisfy the following relationship:

$\frac{425}{4} \times \frac{b \times N - F}{b \times K} G = a \times \varphi M$, where a is an integer greater than or equal to 1, $\varphi$ represents the value of the reference clock frequency, G represents 10^9, and M represents 10^6.

In some possible implementations, N=128 and K=120. Hamming (128,120) is used for the second FEC encoding. Alternatively, the second FEC encoding is performing bitwise exclusive OR on every two consecutive information bits in K=120 information bits to obtain 60 bits, and performing Hamming (68,60) encoding on the 60 bits to obtain S=8 parity bits, where a codeword with a length of 128 bits that is obtained through the second FEC encoding includes the K=120 information bits and the S=8 parity bits.

In some possible implementations, $F = \frac{16 \times b}{17}$, $F = \frac{13 \times b}{17}$, $F = \frac{10 \times b}{17}$, $F = \frac{4 \times b}{17}$, or $F = \frac{b}{17}$.

In some possible implementations, at least one of the following operations is further performed on the m first data streams before the second FEC encoding is performed: alignment marker lock, lane de-skew, and lane reorder.

In some possible implementations, convolutional interleaving has been performed on the m first data streams before the second FEC encoding is performed. The convolutional interleaving includes delaying an input data stream based on r delay lines, where r is an integer greater than 1, each delay line includes a different quantity of storage units, a delay line having a smallest quantity of storage units includes 0 storage units, a difference between quantities of storage units of every two adjacent delay lines is Q, each storage unit is configured to store d bits, bits in the input data stream are sequentially input into the r delay lines based on sequence numbers of the r delay lines, d bits are input into and output from each delay line for a single time, r*d consecutive bits in a data stream output through the convolutional interleaving include the d bits output from each delay line, Q is an integer greater than or equal to 1, and d is an integer multiple of 10.

According to a fourth aspect, an embodiment of this application provides a data processing method. The method is applied to a receiver, and includes the following steps. First, third data processing is performed on received Y modulated symbol streams to obtain m fourth data streams. Each fourth data stream is obtained through demodulation, Y is an integer greater than or equal to 1, m is an integer greater than 1, the Y modulated symbol streams are obtained by performing second data processing on m third data streams, the second data processing includes modulation, the m third data streams are obtained by separately performing first data processing on m second data streams, the m second data streams are obtained by separately performing second FEC encoding on m first data streams, and the m first data streams are obtained through first FEC encoding. The first data stream includes at least one first bit sequence, the second data stream includes at least one second bit sequence, each second bit sequence is obtained by performing second FEC encoding on the first bit sequence, the second bit sequence includes b codewords, b is an integer greater than 1, each codeword includes N bits, N=K+S, K represents a quantity of information bits in the codeword, S represents a quantity of parity bits in the codeword, K is an integer greater than or equal to 1, S is an integer greater than or equal to 1, the first bit sequence includes K×b bits, and the second bit sequence includes N×b bits. The third data stream includes at least one third bit sequence, each third bit sequence is obtained by performing first data processing on the second bit sequence, the third bit sequence includes H bits in the second bit sequence, H=N×b-F, and F is an integer greater than or equal to 1. A value of a baud rate of each modulated symbol stream is an integer multiple of a value of a reference clock frequency. Then, frame synchronization is separately performed on the m fourth data streams.

In some possible implementations, the value of the baud rate of each modulated symbol stream is an integer multiple of 156.25M.

In some possible implementations, band F satisfy the following relationship:

$\frac{425}{4} \times \frac{b \times N - F}{b \times K} G = a \times \varphi M$, where a is an integer greater than or equal to 1, $\varphi$ represents the value of the reference clock frequency, G represents 10^9, and M represents 10^6.

In some possible implementations, N=128 and K=120. Hamming (128,120) is used for the second FEC encoding. Alternatively, the second FEC encoding is performing bitwise exclusive OR on every two consecutive information bits in K=120 information bits to obtain 60 bits, and performing Hamming (68,60) encoding on the 60 bits to obtain S=8 parity bits, where a codeword with a length of 128 bits that is obtained through the second FEC encoding includes the K=120 information bits and the S=8 parity bits.

In some possible implementations,

$$F = \frac{16 \times b}{17}, \quad F = \frac{13 \times b}{17}, \quad F = \frac{10 \times b}{17}, \quad F = \frac{4 \times b}{17}, \text{ or } F = \frac{b}{17}.$$

In some possible implementations, at least one of the following operations is further performed on the m first data streams before the second FEC encoding is performed: alignment marker lock, lane de-skew, and lane reorder.

In some possible implementations, convolutional interleaving has been performed on the m first data streams before the second FEC encoding is performed. The convolutional interleaving includes delaying an input data stream based on r delay lines, where r is an integer greater than 1, each delay line includes a different quantity of storage units, a delay line having a smallest quantity of storage units includes 0 storage units, a difference between quantities of storage units of every two adjacent delay lines is Q, each storage unit is configured to store d bits, bits in the input data stream are sequentially input into the r delay lines based on sequence numbers of the r delay lines, d bits are input into and output from each delay line for a single time, r*d consecutive bits in a data stream output through the convolutional interleaving include the d bits output from each delay line, Q is an integer greater than or equal to 1, and d is an integer multiple of 10.

According to a fifth aspect, an embodiment of this application provides a data processing apparatus. The data processing apparatus is used in a transmitter, and includes a first data processing unit, an encoding unit, a second data processing unit, and a third data processing unit. The first data processing unit is configured to separately perform first data processing on m first data streams obtained through first FEC encoding to obtain m second data streams, where m is an integer greater than 1, each second data stream includes at least one first bit sequence, the first bit sequence includes L bits, P bits in the first bit sequence are from the first data stream, W bits in the first bit sequence are padded virtual bits, W is an integer greater than or equal to 1, and L=P+W. The encoding unit is configured to separately perform second FEC encoding on the m second data streams to obtain m third data streams, where each third data stream includes at least one second bit sequence, each second bit sequence is obtained by performing second FEC encoding on the first bit sequence, the second bit sequence includes b codewords, b is an integer greater than 1, each codeword includes N bits, N=K+S, K represents a quantity of information bits in the codeword, S represents a quantity of parity bits in the codeword, K is an integer greater than or equal to 1, S is an integer greater than or equal to 1, and L=K×b. The second data processing unit is configured to separately perform second data processing on the m third data streams to obtain m fourth data streams, where each fourth data stream includes at least one third bit sequence, each third bit sequence is obtained by performing second data processing on the second bit sequence, the third bit sequence includes M remaining bits other than the virtual bits in the second bit sequence, and M=N×b-W. The third data processing unit is configured to perform third data processing on the m fourth data streams to obtain Y modulated symbol streams, where Y is an integer greater than or equal to 1, the third data processing includes modulation, and a value of a baud rate of each modulated symbol stream is an integer multiple of a value of a reference clock frequency.

In some possible implementations, the value of the baud rate of each modulated symbol stream is an integer multiple of 156.25M.

In some possible implementations, b and W satisfy the following relationship:

$$\frac{425}{4} \times \frac{b \times N - W}{b \times K - W} G = a \times \varphi M \quad,\text{ where } a \text{ is an integer}$$

greater than or equal to 1, $\varphi$ represents the value of the reference clock frequency, G represents 10^9, and M represents 10^6.

In some possible implementations, N=128 and K=120. Hamming (128,120) is used for the second FEC encoding. Alternatively, the second FEC encoding is performing bitwise exclusive OR on every two consecutive information bits in K=120 information bits to obtain 60 bits, and performing Hamming (68,60) encoding on the 60 bits to obtain S=8 parity bits, where a codeword with a length of 128 bits that is obtained through the second FEC encoding includes the K=120 information bits and the S=8 parity bits.

In some possible implementations, W is an integer multiple of 10. $W = \frac{40 \times b}{23}$, $W = \frac{200 \times b}{47}$, $W = \frac{20 \times b}{3}$, or

$W = \frac{440 \times b}{49}$.

In some possible implementations, N=148 and K=140. Hamming (148,140) is used for the second FEC encoding. Alternatively, the second FEC encoding is performing bitwise exclusive OR on every two consecutive information bits in K=140 information bits to obtain 70 bits, and performing Hamming (78,70) encoding on the 70 bits to obtain S=8 parity bits, where a codeword with a length of 148 bits that is obtained through the second FEC encoding includes the K=140 information bits and the S=8 parity bits.

In some possible implementations,

$$W = 4 \times b, \quad W = \frac{220 \times b}{21}, \quad W = \frac{180 \times b}{11}, \quad W = \frac{500 \times b}{23}, \text{ or } W = \frac{80 \times b}{3}.$$

In some possible implementations, at least one of the following operations is further performed on the m first data streams: alignment marker lock, lane de-skew, and lane reorder.

In some possible implementations, convolutional interleaving has been performed on the m first data streams before the first data processing is performed, or convolutional interleaving has been performed on the m second data streams before the second FEC encoding is performed. The convolutional interleaving includes delaying an input data stream based on r delay lines, where r is an integer greater than 1, each delay line includes a different quantity of storage units, a delay line having a smallest quantity of storage units includes 0 storage units, a difference between quantities of storage units of every two adjacent delay lines is Q, each storage unit is configured to store d bits, bits in the input data stream are sequentially input into the r delay lines based on sequence numbers of the r delay lines, d bits are input into and output from each delay line for a single time, r*d consecutive bits in a data stream output through the convolutional interleaving include the d bits output from each delay line, Q is an integer greater than or equal to 1, and d is an integer multiple of 10.

In some possible implementations, input and output switches corresponding to the convolutional interleaving are in a $0^{th}$ delay line each time f bits are output through the convolutional interleaving, where K×b is divisible by f. Alternatively, input and output switches corresponding to the convolutional interleaving are in a $0^{th}$ delay line each time f bits are output through the convolutional interleaving, where P is divisible by f.

In some possible implementations, r×d×c=K×b, and c is an integer greater than or equal to 1. Alternatively, r×d×c=P, and c is an integer greater than or equal to 1.

According to a sixth aspect, an embodiment of this application provides a data processing apparatus. The data processing apparatus is used in a receiver, and includes a data processing unit and a synchronization unit. The data processing unit is configured to perform fourth data processing on received Y modulated symbol streams to obtain m fifth data streams. Each fifth data stream is obtained through demodulation, Y is an integer greater than or equal to 1, the Y modulated symbol streams are obtained by performing third data processing on m fourth data streams, the third data processing includes modulation, the m fourth data streams are obtained by separately performing second data processing on m third data streams, the m third data streams are obtained by separately performing second FEC encoding on m second data streams, the m second data streams are obtained by separately performing first data processing on m first data streams obtained through first FEC encoding, and m is an integer greater than 1. Each second data stream includes at least one first bit sequence, the first bit sequence includes L bits, P bits in the first bit sequence are from the first data stream, W bits in the first bit sequence are padded virtual bits, W is an integer greater than or equal to 1, and L=P+W. Each third data stream includes at least one second bit sequence, each second bit sequence is obtained by performing second FEC encoding on the first bit sequence, the second bit sequence includes b codewords, b is an integer greater than 1, each codeword includes N bits, N=K+S, K represents a quantity of information bits in the codeword, S represents a quantity of parity bits in the codeword, K is an integer greater than or equal to 1, S is an integer greater than or equal to 1, and L=K×b. Each fourth data stream includes at least one third bit sequence, each third bit sequence is obtained by performing second data processing on the second bit sequence, the third bit sequence includes M remaining bits other than the virtual bits in the second bit sequence, and M=N×b-W. A value of a baud rate of each modulated symbol stream is an integer multiple of a value of a reference clock frequency. The synchronization unit is configured to separately perform frame synchronization on the m fifth data streams.

In some possible implementations, the value of the baud rate of each modulated symbol stream is an integer multiple of 156.25M.

In some possible implementations, b and W satisfy the following relationship:

$$\frac{425}{4} \times \frac{b \times N - W}{b \times K - W} G = a \times \varphi M$$

, where a is an integer greater than or equal to 1, $\varphi$ represents the value of the reference clock frequency, G represents 10^9, and M represents 10^6.

In some possible implementations, N=128 and K=120. Hamming (128,120) is used for the second FEC encoding. Alternatively, the second FEC encoding is performing bitwise exclusive OR on every two consecutive information bits in K=120 information bits to obtain 60 bits, and performing Hamming (68,60) encoding on the 60 bits to obtain S=8 parity bits, where a codeword with a length of 128 bits that is obtained through the second FEC encoding includes the K=120 information bits and the S=8 parity bits.

In some possible implementations, W is an integer multiple of 10. $W=\frac{40 \times b}{23}$, $W=\frac{200 \times b}{47}$, $W=\frac{20 \times b}{3}$, or $W=\frac{440 \times b}{49}$ .

In some possible implementations, N=148 and K=140. Hamming (148,140) is used for the second FEC encoding. Alternatively, the second FEC encoding is performing bitwise exclusive OR on every two consecutive information bits in K=140 information bits to obtain 70 bits, and performing Hamming (78,70) encoding on the 70 bits to obtain S=8 parity bits, where a codeword with a length of 148 bits that is obtained through the second FEC encoding includes the K=140 information bits and the S=8 parity bits.

In some possible implementations, $W=4 \times b$, $W=\frac{220 \times b}{21}$, $W=\frac{180 \times b}{11}$, $W=\frac{500 \times b}{23}$, or $W=\frac{80 \times b}{3}$ .

In some possible implementations, at least one of the following operations is further performed on the m first data streams: alignment marker lock, lane de-skew, and lane reorder.

In some possible implementations, convolutional interleaving has been performed on the m first data streams before the first data processing is performed, or convolutional interleaving has been performed on the m second data streams before the second FEC encoding is performed. The convolutional interleaving includes delaying an input data stream based on r delay lines, where r is an integer greater than 1, each delay line includes a different quantity of storage units, a delay line having a smallest quantity of storage units includes 0 storage units, a difference between quantities of storage units of every two adjacent delay lines is Q, each storage unit is configured to store d bits, bits in the input data stream are sequentially input into the r delay lines based on sequence numbers of the r delay lines, d bits are input into and output from each delay line for a single time, r*d consecutive bits in a data stream output through the convolutional interleaving include the d bits output from each delay line, Q is an integer greater than or equal to 1, and d is an integer multiple of 10.

In some possible implementations, input and output switches corresponding to the convolutional interleaving are in a $0^{th}$ delay line each time f bits are output through the convolutional interleaving, where $K \times b$ is divisible by f. Alternatively, input and output switches corresponding to the convolutional interleaving are in a $0^{th}$ delay line each time f bits are output through the convolutional interleaving, where P is divisible by f.

In some possible implementations, $r \times d \times c = K \times b$, and c is an integer greater than or equal to 1. Alternatively, $r \times d \times c = P$, and c is an integer greater than or equal to 1.

According to a seventh aspect, an embodiment of this application provides a data processing apparatus. The data processing apparatus is used in a transmitter, and includes an encoding unit, a first data processing unit, and a second data processing unit. The encoding unit is configured to separately perform second FEC encoding on m first data streams obtained through first FEC encoding to obtain m second data streams. m is an integer greater than 1, the first data stream includes at least one first bit sequence, the second data stream includes at least one second bit sequence, each second bit sequence is obtained by performing second FEC encoding on the first bit sequence, the second bit sequence includes b codewords, b is an integer greater than 1, each codeword includes N bits, N=K+S, K represents a quantity of information bits in the codeword, S represents a quantity of parity bits in the codeword, K is an integer greater than or equal to 1, S is an integer greater than or equal to 1, the first bit sequence includes $K \times b$ bits, and the second bit sequence includes $N \times b$ bits. The first data processing unit is configured to separately perform first data processing on the m second data streams to obtain m third data streams. The third data stream includes at least one third bit sequence, each third bit sequence is obtained by performing first data processing on the second bit sequence, the third bit sequence includes H bits in the second bit sequence, H=N×b-F, and F is an integer greater than or equal to 1. The second data processing unit is configured to perform second data processing on the m third data streams to obtain Y modulated symbol streams. Y is an integer greater than or equal to 1, the second data processing includes modulation, and a value of a baud rate of each modulated symbol stream is an integer multiple of a value of a reference clock frequency.

In some possible implementations, the value of the baud rate of each modulated symbol stream is an integer multiple of 156.25M.

In some possible implementations, b and F satisfy the following relationship: $\frac{425}{4} \times \frac{b \times N - F}{b \times K} G = a \times \varphi M$, where a is an integer greater than or equal to 1, $\varphi$ represents the value of the reference clock frequency, G represents 10^9, and M represents 10^6.

In some possible implementations, N=128 and K=120. Hamming (128,120) is used for the second FEC encoding. Alternatively, the second FEC encoding is performing bitwise exclusive OR on every two consecutive information bits in K=120 information bits to obtain 60 bits, and performing Hamming (68,60) encoding on the 60 bits to obtain S=8 parity bits, where a codeword with a length of 128 bits that is obtained through the second FEC encoding includes the K=120 information bits and the S=8 parity bits.

In some possible implementations, $F = \frac{16 \times b}{17}$, $F = \frac{13 \times b}{17}$, $F = \frac{10 \times b}{17}$, $F = \frac{4 \times b}{17}$, or $F = \frac{b}{17}$.

In some possible implementations, at least one of the following operations is further performed on the m first data streams before the second FEC encoding is performed: alignment marker lock, lane de-skew, and lane reorder.

In some possible implementations, convolutional interleaving has been performed on the m first data streams before the second FEC encoding is performed. The convolutional interleaving includes delaying an input data stream based on r delay lines, where r is an integer greater than 1, each delay line includes a different quantity of storage units, a delay line having a smallest quantity of storage units includes 0 storage units, a difference between quantities of storage units of every two adjacent delay lines is Q, each storage unit is configured to store d bits, bits in the input data stream are sequentially input into the r delay lines based on sequence numbers of the r delay lines, d bits are input into and output from each delay line for a single time, r*d consecutive bits in a data stream output through the convolutional interleaving include the d bits output from each delay line, Q is an integer greater than or equal to 1, and d is an integer multiple of 10.

According to an eighth aspect, an embodiment of this application provides a data processing apparatus. The data processing apparatus is used in a receiver, and includes a data processing unit and a synchronization unit. The data processing unit is configured to perform third data processing on received Y modulated symbol streams to obtain m fourth data streams. Each fourth data stream is obtained through demodulation, Y is an integer greater than or equal to 1, m is an integer greater than 1, the Y modulated symbol streams are obtained by performing second data processing on m third data streams, the second data processing includes modulation, the m third data streams are obtained by separately performing first data processing on m second data streams, the m second data streams are obtained by separately performing second FEC encoding on m first data streams, and the m first data streams are obtained through first FEC encoding. The first data stream includes at least one first bit sequence, the second data stream includes at least one second bit sequence, each second bit sequence is obtained by performing second FEC encoding on the first bit sequence, the second bit sequence includes b codewords, b is an integer greater than 1, each codeword includes N bits, N=K+S, K represents a quantity of information bits in the codeword, S represents a quantity of parity bits in the codeword, K is an integer greater than or equal to 1, S is an integer greater than or equal to 1, the first bit sequence includes K×b bits, and the second bit sequence includes N×b bits. The third data stream includes at least one third bit sequence, each third bit sequence is obtained by performing first data processing on the second bit sequence, the third bit sequence includes H bits in the second bit sequence, H=N×b-F, and F is an integer greater than or equal to 1. A value of a baud rate of each modulated symbol stream is an integer multiple of a value of a reference clock frequency. The synchronization unit is configured to separately perform frame synchronization on the m fourth data streams.

In some possible implementations, the value of the baud rate of each modulated symbol stream is an integer multiple of 156.25M.

In some possible implementations, b and F satisfy the following relationship:

$\frac{425}{4} \times \frac{b \times N - F}{b \times K} G = a \times \varphi M$, where a is an integer greater than or equal to 1, $\varphi$ represents the value of the reference clock frequency, G represents 10^9, and M represents 10^6.

In some possible implementations, N=128 and K=120. Hamming (128,120) is used for the second FEC encoding. Alternatively, the second FEC encoding is performing bitwise exclusive OR on every two consecutive information bits in K=120 information bits to obtain 60 bits, and performing Hamming (68,60) encoding on the 60 bits to obtain S=8 parity bits, where a codeword with a length of 128 bits that is obtained through the second FEC encoding includes the K=120 information bits and the S=8 parity bits.

In some possible implementations, $F = \frac{16 \times b}{17}$, $F = \frac{13 \times b}{17}$, $F = \frac{10 \times b}{17}$, $F = \frac{4 \times b}{17}$, or $F = \frac{b}{17}$.

In some possible implementations, at least one of the following operations is further performed on the m first data streams before the second FEC encoding is performed: alignment marker lock, lane de-skew, and lane reorder.

In some possible implementations, convolutional interleaving has been performed on the m first data streams before the second FEC encoding is performed. The convolutional interleaving includes delaying an input data stream based on r delay lines, where r is an integer greater than 1, each delay line includes a different quantity of storage units, a delay line having a smallest quantity of storage units includes 0 storage units, a difference between quantities of storage units of every two adjacent delay lines is Q, each storage unit is configured to store d bits, bits in the input data stream are sequentially input into the r delay lines based on sequence numbers of the r delay lines, d bits are input into and output from each delay line for a single time, r*d consecutive bits in a data stream output through the convolutional interleaving include the d bits output from each delay line, Q is an integer greater than or equal to 1, and d is an integer multiple of 10.

In embodiments of this application, a virtual bit is periodically inserted (periodically insert) into a data stream obtained through first FEC encoding (that is, outer-code encoding), then second FEC encoding (that is, inner-code encoding) is performed, and then the inserted virtual bit is deleted. Specifically, P bits are periodically obtained from the outer-code encoded data stream, and W virtual bits are inserted, so that there are W virtual bits in every L bits in a to-be-encoded data stream, where L=P+W. The inserted virtual bits are deleted after the second FEC encoding (that is, the inner-code encoding) is performed on the to-be-encoded data stream. Positive integers P and W are selected, to cause the value of the baud rate of the modulated symbol data stream to be an integer multiple of an Ethernet common reference clock (Ethernet common reference clock) frequency. This simplifies clock extraction and synchronization manners of a receiver, implements fast phase locking, and achieves low PLL complexity and low jitter. In addition, the positive integers P and W are further selected. After the receiver performs frame synchronization (that is, frame synchronization of M = N × b - W bits) on received data, inner codeword synchronization can be ensured. This simplifies operations such as the frame synchronization and the inner codeword synchronization of the receiver, and achieves low implementation complexity. In addition, to achieve better performance of a concatenated FEC solution, a convolutional interleaving operation is performed before an inner-code encoding operation. Input and output switches of a convolutional interleaver and a convolutional de-interleaver are at topmost positions each time the convolutional interleaver and the convolutional de-interleaver output f bits. When K× b is divisible by f or P is divisible by f, synchronization of the convolutional de-interleaver can be ensured during the frame synchronization.

## BRIEF DESCRIPTION OF DRAWINGS

FIG. 1 is a diagram of a communication system to which an embodiment of this application is applied;
FIG. 2 is a diagram of a data transmission process in the communication system shown in FIG. 1;
FIG. 3 is a diagram of another communication system to which an embodiment of this application is applied;
FIG. 4 is a schematic flowchart of a data processing method according to an embodiment of this application;
FIG. 5(a) is a diagram of a structure of a second data stream according to an embodiment of this application;
FIG. 5(b) is a diagram of another structure of a second data stream according to an embodiment of this application;
FIG. 6 is a diagram of a data stream structure change that is based on a data processing method according to an embodiment of this application;
FIG. 7(a) is a diagram of a first structure of a convolutional interleaver according to an embodiment of this application;
FIG. 7(b) is a diagram of a second structure of a convolutional interleaver according to an embodiment of this application;
FIG. 8 is another schematic flowchart of a data processing method according to an embodiment of this application;
FIG. 9 is a diagram of an implementation of inner-code encoding according to an embodiment of this application;
FIG. 10 is a diagram of another data stream structure change that is based on a data processing method according to an embodiment of this application;
FIG. 11 is a diagram of another data stream structure change that is based on a data processing method according to an embodiment of this application;
FIG. 12 is a diagram of another data stream structure change that is based on a data processing method according to an embodiment of this application;
FIG. 13 is a diagram of another data stream structure change that is based on a data processing method according to an embodiment of this application;
FIG. 14 is a diagram of another data stream structure change that is based on a data processing method according to an embodiment of this application;
FIG. 15 is a diagram of another implementation of inner-code encoding according to an embodiment of this application;
FIG. 16 is a diagram of another data stream structure change that is based on a data processing method according to an embodiment of this application;
FIG. 17 is a diagram of another data stream structure change that is based on a data processing method according to an embodiment of this application;
FIG. 18 is another schematic flowchart of a data processing method according to an embodiment of this application;
FIG. 19 is another schematic flowchart of a data processing method according to an embodiment of this application;
FIG. 20 is a diagram of another data stream structure change that is based on a data processing method according to an embodiment of this application;
FIG. 21 is a diagram of another data stream structure change that is based on a data processing method according to an embodiment of this application;
FIG. 22 is a diagram of a structure of a data processing apparatus used in a transmitter according to an embodiment of this application;
FIG. 23 is a diagram of another structure of a data processing apparatus used in a transmitter according to an embodiment of this application;
FIG. 24 is a diagram of a structure of a data processing apparatus used in a receiver according to an embodiment of this application; and
FIG. 25 is a diagram of another structure of a data processing apparatus according to an embodiment of this application.

## DESCRIPTION OF EMBODIMENTS

Embodiments of this application provide a data processing method and a data processing apparatus, to simplify clock extraction and synchronization manners of a receiver, implement fast phase locking, and achieve low PLL complexity and low jitter; and to simplify operations such as frame synchronization and inner codeword synchronization of the receiver, and achieve low implementation complexity. It should be noted that, the terms "first", "second", and the like in the specification, claims, and accompanying drawings of this application are intended to distinguish between similar objects but do not necessarily indicate a specific order or sequence. It should be understood that the foregoing terms are interchangeable in proper circumstances so that embodiments described in this application can be implemented in other orders than the order described in this application. Moreover, the terms "include", "have", or any other variant thereof are intended to cover non-exclusive inclusion. For example, processes, methods, systems, products, or devices that include a series of steps or units are not limited to the steps or the units that are clearly listed, and may include other steps and units that are not clearly listed or that are inherent to the processes, methods, products, or devices.

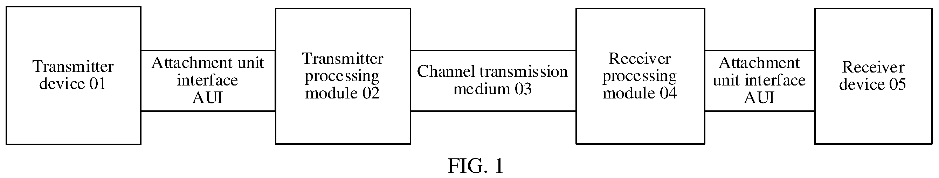

FIG. 1 is a diagram of a communication system to which an embodiment of this application is applied. As shown in FIG. 1, the communication system includes a transmitter device 01, a transmitter processing module 02, a channel transmission medium 03, a receiver processing module 04, and a receiver device 05. For example, the communication system is a data center network. The transmitter device 01 and the receiver device 05 may be devices such as a switch or a router, the transmitter device 01 is also referred to as a host chip (host chip) located at a transmitter, the receiver device 05 is also referred to as a host chip located at a receiver, and the channel transmission medium 03 may be an optical fiber. The host chip is also sometimes referred to as a host device (host device). The transmitter device 01 may be connected to the transmitter processing module 02 through an attachment unit interface (attachment unit interface, AUI), and the receiver device 05 may be connected to the receiver processing module 04 through an AUI. The transmitter processing module 02 and the receiver processing module 04 may each be an optical module (optical module), an electrical module, a connector (connector), or another module that processes data in a data transmission process. For example, the processing module may be an 800LR module (800LR module, which is a coherent optical module). In addition, the transmitter device 01, the transmitter processing module 02, the channel transmission medium 03, the receiver processing module 04, and the receiver device 05 in the communication system may all support bidirectional transmission or unidirectional transmission. This is not specifically limited herein.

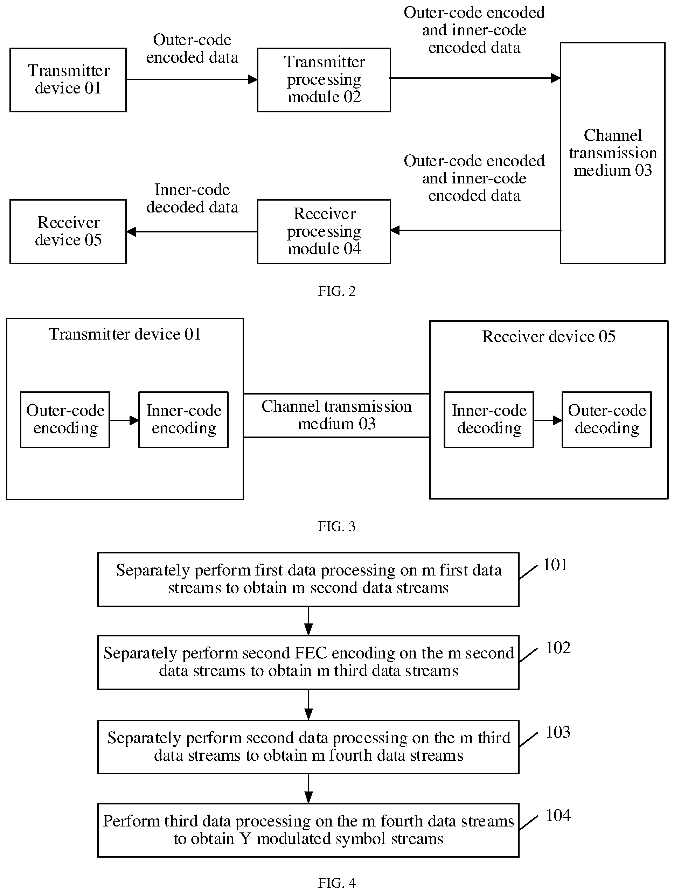

FIG. 2 is a diagram of a data transmission process in the communication system shown in FIG. 1. As shown in FIG. 2, in a process of transmitting data from the transmitter device 01 to the receiver device 05, the transmitter device 01 is configured to perform outer-code encoding on the data, and then transmit outer-code encoded data to the transmitter processing module 02. The transmitter processing module 02 is configured to perform inner-code encoding on the outer-code encoded data, to obtain outer-code encoded and inner-code encoded data, and transmit the outer-code encoded and inner-code encoded data to the channel transmission medium 03. The channel transmission medium 03 is configured to transmit the outer-code encoded and inner-code encoded data to the receiver processing module 04. The receiver processing module 04 is configured to: perform inner-code decoding on the outer-code encoded and inner-code encoded data, and transmit inner-code decoded data to the receiver device 05. The receiver device 05 is configured to perform outer-code decoding on the inner-code decoded data.

It should be understood that the "inner" in inner code and the "outer" in outer code are distinguished based merely on a distance between an execution body that performs an operation on data and the channel transmission medium 03. An execution body that performs an operation on inner code is close to the channel transmission medium, and an execution body that performs an operation on outer code is far away from the channel transmission medium. In embodiments of this application, data is transmitted from the transmitter device 01 to the channel transmission medium 03 via the transmitter processing module 02, and then is transmitted from the channel transmission medium 03 to the receiver device 05 via the receiver processing module 04. A distance that the data encoded by the transmitter device 01 travels to the channel transmission medium 03 is longer than that of the data encoded by the transmitter processing module 02, and a distance that the data decoded by the receiver device 05 travels to the channel transmission medium 03 is longer than that of data decoded by the receiver processing module 04. Therefore, the data encoded by the transmitter device 01 is referred to as outer-code encoded data, the data encoded by the transmitter processing module 02 is referred to as inner-code encoded data, the data decoded by the receiver device 05 is referred to as outer-code decoded data, and data decoded by the receiver processing module 04 is referred to as inner-code decoded data. In a possible implementation, both the inner-code encoding and the outer-code encoding use an FEC encoding manner, so as to form a concatenated FEC transmission solution. For example, the transmitter device 01 may perform the outer-code encoding by using an RS code, and the transmitter processing module 02 may perform the inner-code encoding by using a Hamming (Hamming) code. For another example, the transmitter device 01 may perform the outer-code encoding by using an RS code, and the transmitter processing module 02 may perform the inner-code encoding by using a Bose-Chaudhuri-Hocquenghem (Bose-Chaudhuri-Hocquenghem, BCH) code. A BCH code for correcting a single error is equivalent to the Hamming code. For another example, the transmitter device 01 may perform outer-code encoding by using an RS code, and the transmitter processing module 02 may perform inner-code encoding by using a polar (Polar) code.

FIG. 3 is a diagram of another communication system to which an embodiment of this application is applied. As shown in FIG. 3, the communication system includes a transmitter device 01, a channel transmission medium 03, and a receiver device 05. The transmitter device 01 performs outer-code encoding and inner-code encoding on data, and sends outer-code encoded and inner-code encoded data to the transmission medium 03, and the receiver device 05 performs inner-code decoding and outer-code decoding on the data received from the transmission medium 03. For example, the communication system is a data center network. The transmitter device 01 and the receiver device 05 may each be a switch, a router, or another device. In addition, the transmitter device 01 is also referred to as a host chip (host chip) located at a transmitter, the receiver device 05 is also referred to as a host chip located at a receiver, and the channel transmission medium 03 may be an optical fiber. The host chip is also sometimes referred to as a host device (host device). The transmitter device 01, the channel transmission medium 03, and the receiver device 05 in the communication system may all support bidirectional transmission or unidirectional transmission. This is not specifically limited herein.

It should be noted that the foregoing content is example description of an application scenario of the data processing method provided in embodiments of this application, and does not constitute any limitation on application scenarios of the data processing method. A person of ordinary skill in the art may learn that, as a service requirement changes, the application scenario of the data processing method may be adjusted based on an application requirement. Application scenarios are not listed one by one in embodiments of this application.

FIG. 4 is a schematic flowchart of a data processing method according to an embodiment of this application. It should be understood that the data processing method is applied to a transmitter. For example, the data processing method may be specifically implemented by the transmitter processing module 02 shown in FIG. 2. For another example, the data processing method may be specifically implemented by the transmitter device 01 shown in FIG. 3.

101: Separately perform first data processing on m first data streams to obtain m second data streams.

In this embodiment, all the m first data streams are data streams obtained through first FEC encoding, namely, outer-code encoded data streams described above. Typically, a value of m is 4, 8, 16, 32, or 64. An RS code may be used for the outer-code encoding, and the outer-code encoded data stream may include a plurality of RS codewords. In actual application, the outer-code encoding may alternatively be performed in another encoding scheme. For ease of description, the RS codeword is used below to uniformly represent a codeword generated through the outer-code encoding. It should be noted that, in this application, a code length of outer code is measured in outer code symbols, and the outer code symbol may include one or more bits. For example, the outer code is a KP4 RS (544,514) code, the code length is 544 symbols, and one RS symbol of the outer code includes 10 bits.

Specifically, P bits are periodically obtained from each first data stream, and virtual (Virtual) bits with a length of W bits are inserted, to obtain one second data stream. In other words, there are W virtual bits in every L = P + W bits in the second data stream. It should be understood that a naming manner of the virtual bit is not limited in this application. For example, the virtual bit may also be referred to as a padding (Pad) bit. In some possible scenarios, all the W virtual bits are 0. In some other possible scenarios, the W virtual bits are preset random bits. It should be noted that the virtual bits may be a preset fixed bit sequence. For example, all the W virtual bits are 0. For another example, the W virtual bits are a bit sequence in which 0 and 1 are combined in any manner. Alternatively, the virtual bits are a random bit sequence generated by using a pseudo random binary sequence (pseudo random binary sequence, PRBS) generator.

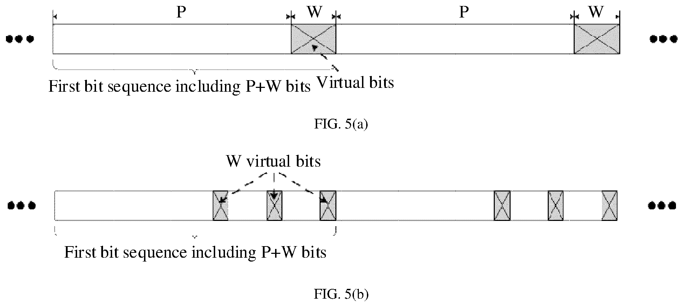

FIG. 5(a) is a diagram of a structure of a second data stream according to an embodiment of this application. As shown in FIG. 5(a), the second data stream includes at least one first bit sequence, each first bit sequence includes L = P + W bits, the P bits in each first bit sequence are from the first data stream, and the W bits in each first bit sequence are padded virtual bits. It should be noted that specific positions of the virtual bits in the first bit sequence are not limited in this application. In an example, as shown in FIG. 5(a), the W virtual bit sequences are located after the P bits.

FIG. 5(b) is a diagram of another structure of a second data stream according to an embodiment of this application. As shown in FIG. 5(b), in another example, the W virtual bits may not all be consecutively arranged in the first bit sequence. In still another example, the W virtual sequences may alternatively be located before the P bits, and no accompanying drawing is provided herein.

102: Separately perform second FEC encoding on the m second data streams to obtain m third data streams.

Specifically, a second bit sequence is obtained by performing second FEC encoding on each first bit sequence in the second data stream, and each third data stream includes at least one second bit sequence. The second FEC encoding may be understood as the inner-code encoding described above. In an example, an inner-code encoder is used to perform inner-code encoding on every K bits in the first bit sequence, to be specific, add S parity bits to obtain an inner codeword having a total of N bits, that is, N=K+S, where K≥1 and S≥1. It should be understood that a bit length L = P + W of each first bit sequence is a multiple of an inner code information length K, where L = K × b, b is an integer greater than 1, and a bit length of the second bit sequence obtained by performing inner-code encoding on the first bit sequence is N × b. It should be understood that all bits (including virtual bits) sent for inner-code encoding are referred to as information bits.

It should be noted that the first bit sequence has the bit length L = K × b, and includes b bit groups, and each of the bit groups includes K bits. The W virtual bits may be distributed in $\hat{b}$ bit groups, and each of the $\hat{b}$ bit groups includes W/$\hat{b}$ virtual bits, where $\hat{b} < b$. In some specific scenarios, the W virtual bits are distributed in last $\hat{b}$ bit groups in the first bit sequence. In some other specific scenarios, the W virtual bits are distributed in first $\hat{b}$ bit groups in the first bit sequence.

103: Separately perform second data processing on the m third data streams to obtain m fourth data streams.

Specifically, a third bit sequence may be obtained by deleting (remove) W virtual bits in each second bit sequence, where the third bit sequence includes M=N×b-W bits. Each fourth data stream includes at least one third bit sequence.

104: Perform third data processing on the m fourth data streams to obtain Y modulated symbol streams.

In this embodiment, the third data processing including modulation is performed on the m fourth data streams to obtain the Y modulated symbol streams, where Y is an integer greater than or equal to 1.

In some possible implementations, an operation of the third data processing may further include codeword interleaving or modulated symbol interleaving. The codeword interleaving is disturbing a bit order of a bit stream in the fourth data stream, and the modulated symbol interleaving is disturbing a symbol order of a modulated symbol stream. It should be noted that the codeword interleaving may be used to disturb an order of a plurality of fourth data streams and combine the plurality of fourth data streams into one data stream, and then perform modulation to obtain one modulated symbol stream. The modulated symbol interleaving may be used to modulate a plurality of fourth data streams, disturb a symbol order, and combine modulated symbol streams into one modulated symbol stream. It should be understood that the codeword interleaving or the modulated symbol interleaving may be used to interleave colored noise in channel transmission and disturb an order, so that quality of a signal recovered at a receiver is good.

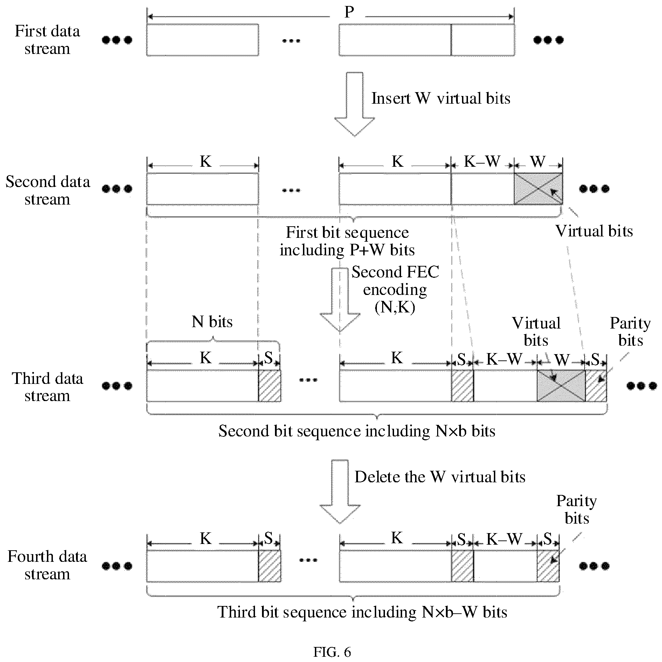

FIG. 6 is a diagram of a data stream structure change that is based on a data processing method according to an embodiment of this application. As shown in FIG. 6, for example, W virtual sequences are located after P bits. P bits are periodically obtained from each first data stream, and W virtual bits are inserted to obtain a first bit sequence with a length of L = P + W = K × b bits. The first bit sequence includes b bit groups, and each of the bit groups includes K bits. Second FEC encoding (also referred to as inner-code encoding) is separately performed on each bit group with a bit length K in the first bit sequence, to obtain a second bit sequence with a total length of N × b bits. Then, the W virtual bits are deleted from the second bit sequence to obtain a third bit sequence with a length of M = N × b - W bits. It should be noted that, in some possible scenarios, step 401 to step 404 may be collectively referred to as third FEC encoding, that is, the third bit sequence with the length of M = N × b - W bits may be obtained by performing third FEC encoding on the P bits, where an information length of the third FEC encoding is P bits, a codeword length of the third FEC encoding is M = N × b - W bits, and a corresponding code rate is P/M. It should be understood that the third bit sequence may be referred to as a codeword combination block, and may also be referred to as a frame (frame).

It should be noted that, in some specific embodiments, all the W virtual bits are 0. In this case, performing data processing on the P bits in the first data stream to obtain the third bit sequence with the length of M = N × b - W bits in step 101 to step 103 is equivalent to the following operations:

Step 1: Periodically obtain P bits from each first data stream, where the P bits include b to-be-encoded subsequences, a quantity of bits of an $i^{th}$ to-be-encoded subsequence is $K_i$, $0 \le i < b$, and $K_0 + K_1 + K_2 + \cdots + K_{b-1} =$ P. The quantity $K_i$ of bits of the $i^{th}$ to-be-encoded subsequence is not greater than the bit length K of the second FEC encoding, that is, $K_i \le$ K, where $0 \le i < b$, and K × b - P = W.

Step 2: Perform data processing on the P bits to obtain a third bit sequence of M bits, where the third bit sequence includes b encoded sub-codewords, a quantity of bits of an $i^{th}$ encoded sub-codeword is $N_i = N - K + K_i$, $0 \le i < b$, N is a codeword length of the second FEC encoding, and the $i^{th}$ encoded sub-codeword is obtained by performing $i^{th}$ FEC sub-encoding $(N_i, K_i)$ on the $i^{th}$ to-be-encoded subsequence.

It should be noted that a bit length of the third bit sequence is M = $N_0 + N_1 + N_2 + \cdots + N_{b-1}$ = (N - K + $K_0$) + (N - K + $K_1$) + (N - K + $K_2$) + $\cdots$ + (N - K + $K_{b-1}$) = N × b - K × b + ($K_0 + K_1 + K_2 + \cdots + K_{b-1}$) = N × b - (K × b - P) = N × b - W.

In some specific scenarios, $i^{th}$ FEC sub-encoding $(N_i, K_i)$ is obtained by shortening second FEC encoding (N, K) by K - $K_i$ bits. To be specific, an operation of performing $i^{th}$ FEC sub-encoding $(N_i, K_i)$ on $K_i$ bits to obtain a codeword with a bit length $N_i$ is equivalent to first adding (padding) K - $K_i$ 0 bits to the $K_i$ bits to obtain K bits, then performing second FEC encoding (N, K) on the K bits to obtain encoded bits with a bit length N, and finally deleting the added K - $K_i$ 0 bits from the encoded bits with the length N to obtain the codeword with the bit length $N_i$ = N - (K - $K_i$).

It should be noted that, in some specific scenarios, values of b - $\hat{b}$ numbers in the b to-be-encoded subsequence lengths {$K_0$, $K_1$, $K_2$, ..., $K_{b-1}$} are all K, and values of $\hat{b}$ remaining numbers are all W/$\hat{b}$. In this case, there are two types of FEC sub-encoding $(N_i, K_i)$. One type is the second FEC encoding (N, K). The other type is obtained by shortening the second FEC encoding (N, K) by W/$\hat{b}$ bits. In other words, the other type is second FEC encoding (N - W/$\hat{b}$, K - W/$\hat{b}$).

In some possible implementations, before the first data processing is performed on the m first data streams, at least one of the following operations may be further performed on the m first data streams: alignment marker lock (alignment lock), lane de-skew (lane de-skew), lane reorder (lane reorder), and the like.

It should be noted that, considering that for an AWGN channel, error bits input into inner-code decoding comply with random distribution, but error bits output from the decoding do not comply with the random distribution, adding a concatenated interleaver between an inner code and the outer code can make performance of an overall concatenated FEC solution better. An operation of concatenated interleaving usually includes convolutional interleaving to achieve a low latency. A specific implementation of the concatenated interleaving includes lane permutation (Lane Permutation) and the convolutional interleaving. In the lane permutation, data permutation is performed on g input data streams to obtain g data streams obtained through the data permutation. Then, the convolutional interleaving is separately performed to obtain g data streams obtained through the convolutional interleaving. Another specific implementation of the concatenated interleaving includes lane multiplexing and the convolutional interleaving. In the lane multiplexing, symbol multiplexing (symbol mux) or bit multiplexing (bit mux) is performed on g input data streams to obtain g1 multiplexed data streams, where g is divisible by g1. Then, the convolutional interleaving is separately performed on the g1 data streams to obtain g1 data streams obtained through the convolutional interleaving. In this case, g1 is not equal to g. In other words, a quantity g of input data streams before the concatenated interleaving may be the same as or different from a quantity g1 of output data streams obtained by performing concatenated interleaving on the input data streams. This is specifically subject to an actual application scenario, and is not limited herein.

Further, before the first data processing is performed on the m first data streams, the convolutional interleaving may be performed on the m first data streams. Alternatively, before the second FEC encoding is performed on the m second data streams, the convolutional interleaving may be performed on the m second data streams.

The following describes a possible implementation of the foregoing convolutional interleaving.

A convolutional interleaver that performs convolutional interleaving includes r delay lines, each delay line includes a different quantity of storage units, a delay line having a smallest quantity of storage units includes 0 storage units, a difference between quantities of storage units of every two adjacent delay lines is Q, and r is an integer greater than 1. Each storage unit is configured to store d bits. Bits in each lane data stream are sequentially input into the r delay lines based on sequence numbers of the r delay lines, and d bits are input into and output from each delay line for a single time. r*d consecutive bits in a data stream output through the convolutional interleaving include the d bits output from each delay line, Q is an integer greater than or equal to 1, and d is an integer greater than or equal to 1. For example, the r delay lines respectively include 0 storage units, Q storage units, 2Q storage units, ..., and (r-1)Q storage units, and each storage unit is configured to store the d bits. In this case, the r delay lines respectively correspond to r delay values, and the delay values include 0 bits, Q×d bits, 2Q×d bits, ..., and (r-1)Q×d bits. A larger quantity of bits included in the delay value of the delay line indicates a longer delay (also referred to as a latency) caused by the delay line on the data stream. It should be understood that, when the delay line includes no storage unit, a delay caused by the delay line is 0 bits, in other words, transparent transmission without a delay is performed.

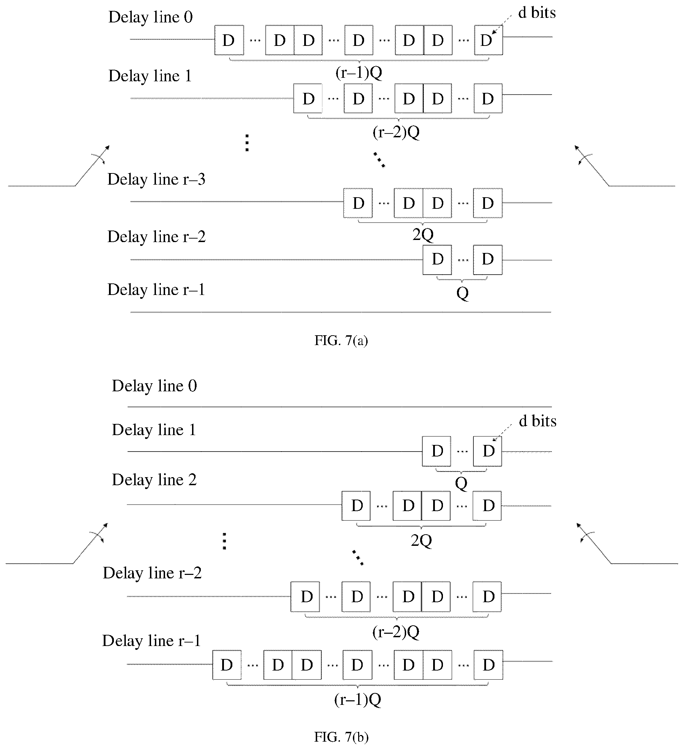

The following describes a specific structure of the convolutional interleaver with reference to the accompanying drawings. FIG. 7(a) is a diagram of a first structure of a convolutional interleaver according to an embodiment of this application. As shown in FIG. 7(a), quantities of storage units in the r delay lines decrease in order of the sequence numbers of the r delay lines. To be specific, a delay line 0 has (r-1)Q storage units, there is a decrease of Q storage units for each delay line sequentially, and a delay line r-1 has 0 storage units. FIG. 7(b) is a diagram of a second structure of a convolutional interleaver according to an embodiment of this application. As shown in FIG. 7(b), quantities of storage units in the r delay lines increase in order of the sequence numbers of the r delay lines. To be specific, a delay line 0 has 0 storage units, there is an increase of Q storage units for each delay line sequentially, and a delay line r-1 has (r-1)Q storage units.

It should be noted that, at a same moment, input and output switches (switches) of the convolutional interleaver are in a same delay line. After d bits are input into and output from a current delay line for a single time, positions of the switches are updated to a next delay line, to ensure that the bits in the input data stream of the convolutional interleaver are sequentially input into the r delay lines based on the sequence numbers of the r delay lines, and the r × d consecutive bits in the input data stream of the convolutional interleaver include the d bits output from each delay line. A specific data read/write operation performed by the convolutional interleaver is as follows: d bits are read from a storage unit that is closest to an output port and that is in the current delay line. d bits stored in each storage unit in the current delay line are transferred to a next storage unit. Next, d bits are written into a storage unit that is closest to an input port and that is in the current delay line. Then, updating to a next delay line is performed, and the foregoing operations are repeated. The rest can be deduced by analogy.

It should be understood that when same parameters r, Q, and d are used, convolutional interleaving processing in FIG. 7(a) and convolutional interleaving processing in FIG. 7(b) are inverse operations of each other. In other words, when the transmitter processing module uses the convolutional interleaving structure shown in FIG. 7(a), the structure shown in FIG. 7(b) is used for convolutional de-interleaving corresponding to a receiver processing module that corresponds to the transmitter processing module. Similarly, when the transmitter processing module uses the convolutional interleaving structure shown in FIG. 7(b), the structure shown in FIG. 7(a) is used for convolutional de-interleaving corresponding to a receiver processing module that corresponds to the transmitter processing module. It should be noted that, in some scenarios, KP4 is used for the outer-code encoding, a bit length of one symbol of KP4 is 10, and an integer multiple of 10 is selected as d, so that hardware implementation complexity of the overall concatenated solution can be low.

It should be noted that, if the transmitter processing module uses the concatenated interleaving including the convolutional interleaving, when performing convolutional de-interleaving, the receiver processing module needs to perform convolutional de-interleaving synchronization, that is, obtain positions of input and output switches (input and output switches) of a convolutional de-interleaver. To ensure the convolutional de-interleaving synchronization during frame synchronization, a start position of each frame needs to correspond to a start position that is of switches and in which the input and output switches (input and output switches) of the convolutional de-interleaver are located, which is usually a topmost position (topmost position), for example, a position of the delay line 0 shown in FIG. 7(a) and FIG. 7(b).

In some specific scenarios, input and output switches of the convolutional interleaver and the convolutional de-interleaver are at topmost positions each time the convolutional interleaver and the convolutional de-interleaver output f bits. When $K \times b$ is divisible by f, synchronization of the convolutional de-interleaver can be ensured during the frame synchronization. A specific manner is $r \times d \times c = K \times b$, where r is a quantity of delay lines of the convolutional interleaver and the convolutional de-interleaver, d is a quantity of bits stored in storage units of the convolutional interleaver and the convolutional de-interleaver, and c is a positive integer.

In some other specific scenarios, input and output switches of the convolutional interleaver and the convolutional de-interleaver are at topmost positions each time the convolutional interleaver and the convolutional de-interleaver output f bits. When P is divisible by f, synchronization of the convolutional de-interleaver can be ensured during the frame synchronization. A specific manner is $r \times d \times c = P$, where r is a quantity of delay lines of the convolutional interleaver and the convolutional de-interleaver, d is a quantity of bits stored in storage units of the convolutional interleaver and the convolutional de-interleaver, and c is a positive integer.

In this way, based on improvement of the transmitter processing module in this application, that the receiver processing module implements the frame synchronization of received data is equal to implementation of both inner codeword synchronization and the convolutional de-interleaving synchronization. This simplifies operations such as the frame synchronization, the inner codeword synchronization, and concatenated interleaving synchronization of the receiver, and achieves low implementation complexity.

It should be noted that, in this application, positive integers P and W are selected, to cause a value of a baud rate of the modulated symbol data stream obtained through the third data processing to be an integer multiple of a reference clock (reference clock) frequency. This simplifies implementation of clock extraction and clock synchronization of the receiver, implements fast phase locking, and achieves low PLL complexity and low jitter. It should be understood that a specific value of the reference clock frequency is not limited in this application. For example, the value may be an Ethernet common reference clock (Ethernet common reference clock) frequency. In an example, the value of the baud rate of the modulated symbol data stream is an integer multiple of 156.25M. It should be further understood that a specific error range may be accepted in actual application. For example, the value of the baud rate of the modulated symbol data stream is the integer multiple of 156.25M plus or minus V (ppm), where V may be 20, 50, or 100.

Considering an 800GbE scenario, the transmitter device performs outer-code encoding on to-be-transmitted 800GbE service data streams by using a KP4 RS (544,514) code to obtain data streams with a total rate of 850 Gbps, performs PMA processing, and sends processed data streams to the transmitter processing module through an attachment unit interface 800GAUI. The transmitter processing module sequentially performs first data processing, second FEC encoding, and second data processing on the m first data streams to obtain the m fourth data streams, where a total rate of the m fourth data streams is $850 \times \frac{b \times N - W}{b \times K - W}$ Gbps. The third data processing including PAM4 modulation is performed on the fourth data streams to obtain four modulated symbol streams, where a baud rate of each of the four modulated symbol streams is $\frac{850}{2 \times 4} \times \frac{b \times N - W}{b \times K - W}$ Gbaud, and baud herein represents a rate of modulated symbols transmitted per second.

It should be noted that in a 1.6TbE scenario, the transmitter device performs outer-code encoding on to-be-transmitted 1.6TbE service data streams by using a KP4 RS (544,514) code to obtain data streams with a total rate of 1.7 Tbps, performs PMA processing, and sends processed data streams to the transmitter processing module through an attachment unit interface AUI. The transmitter processing module obtains eight PAM4 modulated symbol streams by performing first data processing, second FEC encoding, second data processing, and third data processing, where a baud rate of each of the eight PAM4 modulated symbol streams is $\frac{1700}{2 \times 8} \times \frac{b \times N - W}{b \times K - W}$ Gbaud. It should be understood that, when the modulation in the third data stream processing may not be the PAM4 modulation, and may be, for example, PAM8 modulation, eight PAM8 modulated symbol streams are obtained, where a baud rate of each of the eight PAM8 modulated symbol streams is $\frac{1700}{3 \times 8} \times \frac{b \times N - W}{b \times K - W}$ Gbaud.

It is assumed that the reference clock frequency is φ MHz. The following uses the 800GbE scenario as an example for description. A value of the baud rate of each of the four PAM4 modulated symbol streams is an integer multiple of the Ethernet common reference clock frequency, where $\frac{850}{2\times4} \times \frac{b\times N-W}{b\times K-W} G = a \times \varphi M$, N is a code length of the inner code, K is the information bit length of the inner code, and a is a positive integer. Herein, G represents 10^9, and M represents 10^6. In this case, the implementation of the clock extraction and the clock synchronization of the receiver is simple, the fast phase locking can be implemented, and the low PLL complexity and the low jitter are achieved. One Ethernet common reference clock frequency is 156.25 MHz.

It should be noted that a parameter combination N, K, P, and W used in the foregoing 800GbE scenario may be used in a higher-rate scenario, for example, the 1.6TbE scenario. For example, when the PAM4 modulation and the eight PAM4 modulated symbol streams are used for 1.6TbE, $\frac{1700}{2\times8} \times \frac{b\times N-W}{b\times K-W} G = \tilde{a} \times \varphi M$. In this case, an integer ã used for 1.6TbE is equal to the integer a in the 800GbE scenario.

It should be noted that, before performing inner-code decoding, the receiver needs to identify and obtain boundaries of the inner codeword. Further, the positive integers P and W are selected, to cause L = P + W to be a multiple of the information length K of the second FEC encoding (inner code). In this case, the receiver processing module may perform simple and fast frame synchronization by calculating a syndrome (syndrome) corresponding to the received data, that is, implement synchronization of M = N × b - W bits, to identify the boundaries of the codeword. A frame including the M bits corresponds to the third bit sequence. The frame synchronization may also be referred to as codeword combination block synchronization.

It should be further noted that a bit sequence that is with a length of M = N × b - W bits and that is received by the receiver is referred to as a fourth bit sequence, and a fifth bit sequence with a bit length N × b is obtained by inserting W virtual bits into the fourth bit sequence based on an inverse operation of step 403. If the fifth bit sequence is a valid codeword combination block (frame), the fifth bit sequence includes b second FEC encoding (inner code) codewords, that is, a syndrome corresponding to every N bits in the fifth bit sequence is 0. The syndrome may be obtained by multiplying the received N bits by a parity check matrix (parity check matrix) corresponding to the second FEC encoding. If the syndrome is 0, it indicates that the received N bits are a valid second FEC codeword.

At the receiver, a frame synchronization operation is as follows: A window with a preset length of Z bits is considered, and codeword combination block (frame) synchronization detection is performed on the received data by using a sliding window of the bits. In some specific application scenarios, the window bit length Z is equal to M. W virtual bits are inserted into the Z bits, where Z + W = b * N, and syndromes corresponding to b groups of N bit sequences are calculated, to obtain b syndromes in total. If a quantity of syndromes that are 0 in the b syndromes is greater than a preset threshold $b_1$, it may be declared that the codeword combination block (frame) synchronization is implemented in the window in this case, to obtain the boundaries of the inner codeword. If a quantity of syndromes that are 0 in the b syndromes is not greater than a preset threshold $b_1$, the window continues to slide forward by the preset quantity of bits, and the codeword combination block (frame) synchronization detection continues to be performed.

In some other specific application scenarios, the window bit length Z is greater than M. A plurality of groups of W virtual bits are inserted into the Z bits to obtain $b_0 \times N$ bits, where the $b_0 \times N$ bits include $b_0$ groups of sequences including N bits, and syndromes corresponding to the $b_0$ groups of sequences including the N bits are separately calculated, to obtain $b_0$ syndromes in total. If a quantity of syndromes that are 0 in the $b_0$ syndromes is greater than a preset threshold $b_1$, it may be declared that the codeword combination block (frame) synchronization is implemented in the window in this case, to obtain the boundaries of the inner codeword. It should be noted that specific values of the preset window bit length Z and the preset threshold $b_1$ may be selected based on a specific inner code parameter and channel quality. This is not limited herein.

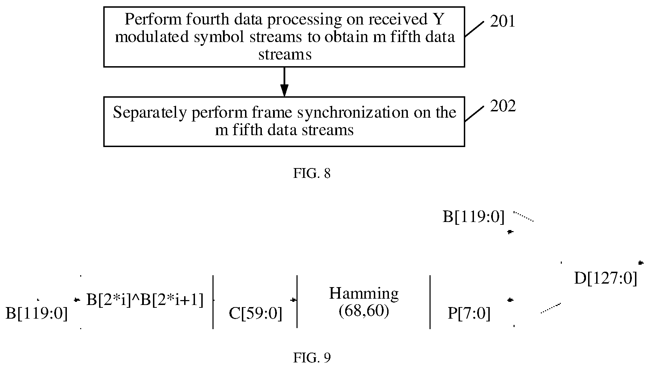

FIG. 8 is another schematic flowchart of a data processing method according to an embodiment of this application. It should be understood that the data processing method is applied to a receiver. For example, the data processing method may be specifically implemented by the receiver processing module 04 shown in FIG. 2 or the receiver device 05 shown in FIG. 3.

201: Perform fourth data processing on received Y modulated symbol streams to obtain m fifth data streams.

It should be understood that the Y modulated symbol streams are from the transmitter processing module 02 shown in FIG. 2 or the transmitter device 01 shown in FIG. 3. For a feature and a generation manner of the modulated symbol stream, refer to the related descriptions in the embodiment shown in FIG. 4. Details are not described herein again. The receiver processing module 04 or the receiver device 05 performs fourth data processing including demodulation on the Y modulated symbol streams to obtain the m fifth data streams, where the fourth data processing performed by the receiver processing module 04 or the receiver device 05 is an inverse operation of third data processing performed by the transmitter processing module 02 or the transmitter device 01.

202: Separately perform frame synchronization on the m fifth data streams.

The receiver processing module 04 or the receiver device 05 may perform a frame synchronization operation on each fifth data stream, to determine boundaries (boundaries) of each frame ($M = N \times b - W$ bits) in the fifth data stream, so as to obtain boundaries of an inner codeword, that is, implement inner codeword synchronization. Further, the frame synchronization may also ensure synchronization of a concatenated convolutional de-interleaver. A start position of each frame is obtained, and switch positions of concatenated convolutional de-interleaving are set to a topmost position, to complete the synchronization of the convolutional de-interleaver.

It should be understood that, after completing the frame synchronization, the receiver processing module 04 or the receiver device 05 further performs fifth data processing on the m fifth data streams. The fifth data processing may include inverse operations of first data processing, second FEC encoding, and second data processing that are performed by the transmitter processing module 02 or the transmitter device 01. For example, the inverse operation of the second FEC encoding is inner-code decoding (second FEC decoding). Specific implementations of the inverse operations are not described one by one herein.

The following uses a specific application scenario as an example to describe operations performed by the transmitter processing module 02 and the receiver processing module 04.

The transmitter processing module 02 separately performs first data processing on m first data streams obtained through first FEC encoding (outer-code encoding) to obtain m second data streams. Each second data stream includes at least one first bit sequence, the first bit sequence includes L=P+W bits, the P bits in the first bit sequence are from the first data stream, and the W bits in the first bit sequence are padded virtual bits. Next, the second FEC encoding is separately performed on the m second data streams to obtain m third data streams, where a second bit sequence is obtained by performing second FEC encoding on each first bit sequence, and the second bit sequence includes b codewords. Subsequently, the second data processing is separately performed on the m third data streams to obtain m fourth data streams, where a third bit sequence is obtained by performing second data processing on each second bit sequence, and the third bit sequence includes M remaining bits other than the virtual bits in the second bit sequence. Then, the third data processing is performed on the m fourth data streams to obtain the Y modulated symbol streams, where the third data processing includes modulation, and a value of a baud rate of each modulated symbol stream is an integer multiple of a value of a reference clock frequency. In some specific scenarios, for an 800GbE service scenario, Y=4, and for a 1.6TbE service scenario, Y=8. In this application material, the 800GbE service scenario is used as an example to describe the data processing method, and the data processing method may be simply extended to the 1.6TbE service scenario. A specific implementation of the data processing method in the 1.6TbE service scenario is known to a person of ordinary skill in the art. Details are not described herein.

The receiver processing module 04 performs fourth data processing on the received Y modulated symbol streams to obtain the m fifth data streams, where the fourth data processing is the inverse operation of the third data processing, and includes PAM4 demodulation. Then, the frame synchronization is performed to obtain the boundaries of the frame of the $M = N \times b - W$ bits in the fifth data stream. Then, the fifth data processing is performed on the m fifth data streams. The fifth data processing may be understood as the inverse operation of the first data processing, the second FEC encoding, and the second data processing that are performed by the transmitter processing module 02.

It should be noted that, before performing inner-code decoding, the receiver processing module 04 needs to determine the boundaries of the inner codeword, in other words, needs to perform inner codeword synchronization. It should be further noted that, before performing convolutional de-interleaving, the receiver processing module 04 needs to determine positions of input and output switches in the convolutional de-interleaving, in other words, needs to perform convolutional de-interleaving synchronization. Based on the foregoing descriptions, that the receiver processing module 04 implements the frame synchronization of received data is equal to implementation of both the inner codeword synchronization and the convolutional de-interleaving synchronization, and no other operations need to be designed for the inner codeword synchronization and the convolutional de-interleaving synchronization. This simplifies operations such as the frame synchronization, the inner codeword synchronization, and the convolutional de-interleaving of the receiver, and achieves low implementation complexity.

The following provides several embodiments based on different inner-code encoding schemes to describe possible values of P and W.

Implementation 1: An FEC code with an information length K=120 bits and a codeword length N=128 bits is used for the second FEC encoding.

It is considered that the FEC code with the information length K=120 bits and the codeword length N=128 bits is used for the second FEC encoding. For example, Hamming (128,120) is used.

FIG. 9 is a diagram of an implementation of second FEC encoding (inner-code encoding) according to an embodiment of this application. For another example, the encoding scheme shown in FIG. 9 is used. To-be-encoded 120-bit data is represented as B[119:0], bitwise exclusive OR is performed on every two consecutive bits of the to-be-encoded 120-bit data to obtain 1-bit data C[i], and 60-bit data is obtained in total, and is represented as C[59:0], where C[i]=B[2*i]^B[2*i+1], and $0 \le i \le 59$. Then, C[59:0] is used as information data to perform Hamming (68,60) encoding to obtain 8-bit parity data, and the 8-bit parity data is represented as P[7:0]. Finally, a total of 128 bits: B[119:0] and P[7:0] are concatenated into an output of the second FEC encoding, and the output is represented as D[127:0]. D[119:0] is from B[119:0], and D [127:120] is from P[7:0]. In some actual scenarios, a Hamming (68,60) code is also referred to as a single extended Hamming Extended Hamming (68,60) code, and is obtained by shortening an extended Hamming Extended Hamming (128,120) code by 60 bits. It should be noted that the single extended Hamming code and a double extended Hamming code in this application are also referred to as Hamming Hamming codes for short.

Considering the 800GbE scenario, the transmitter device performs outer-code encoding on to-be-transmitted 800GbE service data streams by using a KP4 RS (544,514) code to obtain data streams with a total rate of 850 Gbps, performs PMA processing, and sends processed data streams to the transmitter processing module through an attachment unit interface 800GAUI. The transmitter processing module processes the m first data streams according to the method shown in FIG. 4 to obtain four PAM4 modulated symbol streams, where a baud rate of each of the four PAM4 modulated symbol streams is $\frac{850}{2 \times 4} \times \frac{b \times N - W}{b \times K - W}$ Gbaud, and baud herein represents a rate of modulated symbols transmitted per second. It is assumed that the value $\frac{850}{2 \times 4} \times \frac{b \times N - W}{b \times K - W}$ Gbaud of the baud rate is an integer multiple of an Ethernet common reference clock frequency 156.25 MHz, that is, $\frac{850}{2 \times 4} \times \frac{b \times N - W}{b \times K - W} G = 156.25 \times aM$, where a is a positive integer. It can be learned that $a = 680 \times \frac{b \times N - W}{b \times K - W}$, and is an integer. In this case, implementation of clock extraction and clock synchronization of the receiver is simple, fast phase locking can be implemented, and low PLL complexity and low jitter are achieved.

In this embodiment, K=120 and N=128. In this case, $W = \frac{120 \times a - 87040}{a - 680} \times b$. In this embodiment, it is mainly considered that the baud rate is less than 114 GBaud. Therefore, a value range of a is {726, 727, 728, 729}. The following separately describes different values of a.

(1) When a=726, a corresponding baud rate is 113.4375 GBaud. In this case, $W = \frac{120 \times a - 87040}{a - 680} \times b = \frac{40 \times b}{23}$, where a value of b may be an integer multiple of 23, that is, b=23, 46, 69, .... A corresponding value of W may be obtained as a corresponding positive integer according to $W = \frac{40 \times b}{23}$, that is, W=40, 80, 120, ....

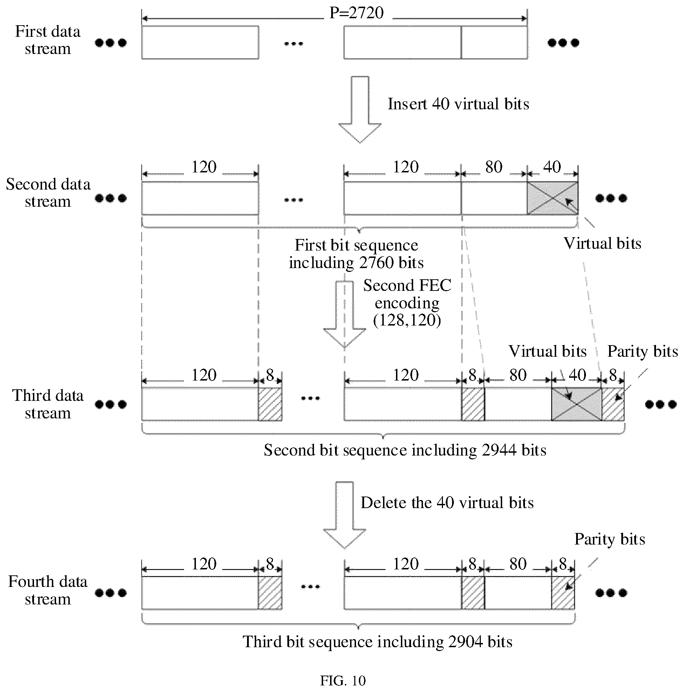

FIG. 10 is a diagram of another data stream structure change that is based on a data processing method according to an embodiment of this application. As shown in FIG. 10, b=23 and W=40. First data processing is performed on a first data stream obtained through first FEC encoding (outer-code encoding) to obtain a second data stream, where each second data stream includes at least one first bit sequence, the first bit sequence includes L=P+W=2720+40=2760 bits, the P=2720 bits in the first bit sequence are from the first data stream, the W=40 bits in the first bit sequence are padded virtual bits, the virtual bits are located at last W consecutive bits of the first bit sequence, the first bit sequence includes b=23 bit groups, and each of the bit groups includes K=120 bits. Second FEC (128,120) encoding is performed on the second data stream to obtain a third data stream, where a second bit sequence is obtained by performing second FEC encoding on each first bit sequence, the second bit sequence includes b=23 codewords of a total of N × b = 128 × 23 = 2944 bits, and the b=23 codewords in the second bit sequence are obtained by separately performing second FEC encoding on the b=23 bit groups that separately include the 120 bits in the first bit sequence. Second data processing is performed on the third data stream to obtain a fourth data stream, where a third bit sequence is obtained by performing second data processing on each second bit sequence, and the third bit sequence includes M = N × b - W = 2904 remaining bits other than the W virtual bits in the second bit sequence.

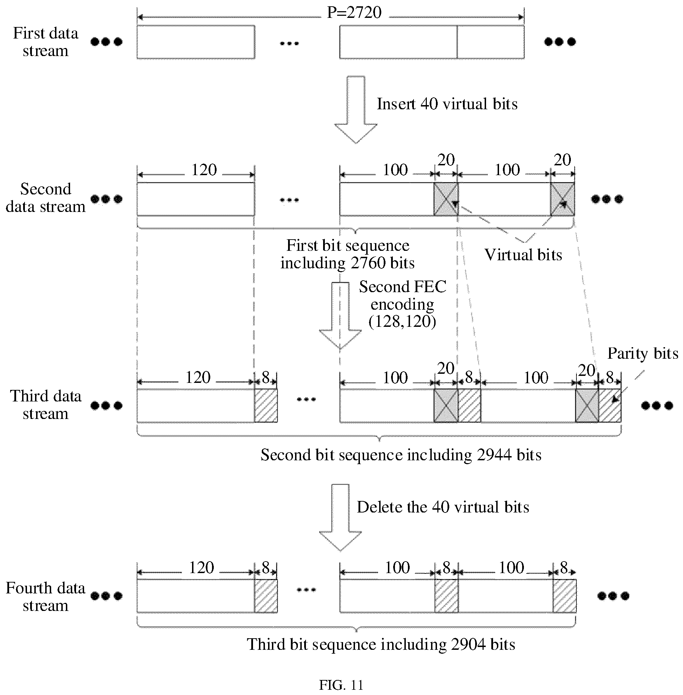

FIG. 11 is a diagram of another data stream structure change that is based on a data processing method according to an embodiment of this application. As shown in FIG. 11, b=23 and W=40. First data processing is performed on a first data stream obtained through first forward error correction FEC encoding (outer-code encoding) to obtain a second data stream, where each second data stream includes at least one first bit sequence, the first bit sequence includes L=P+W=2720+40=2760 bits, the P=2720 bits in the first bit sequence are from the first data stream, the W=40 bits in the first bit sequence are padded virtual bits, all the virtual bits are 0, the first bit sequence includes b=23 bit groups, and each of the bit groups includes K=120 bits. The virtual bits are located in last two bit groups of the first bit sequence, and are located at last 20 bits in the bit groups. Second FEC (128,120) encoding is performed on the second data stream to obtain a third data stream, where a second bit sequence is obtained by performing second FEC encoding on each first bit sequence, the second bit sequence includes b=23 codewords of a total of N × b = 128 × 23 = 2944 bits, and the b=23 codewords in the second bit sequence are obtained by separately performing second FEC encoding on the b=23 bit groups that separately include the 120 bits in the first bit sequence. Second data processing is performed on the third data stream to obtain a fourth data stream, where a third bit sequence is obtained by performing second data processing on each second bit sequence, and the third bit sequence includes M = N × b - W = 2904 remaining bits other than the virtual bits in the second bit sequence.

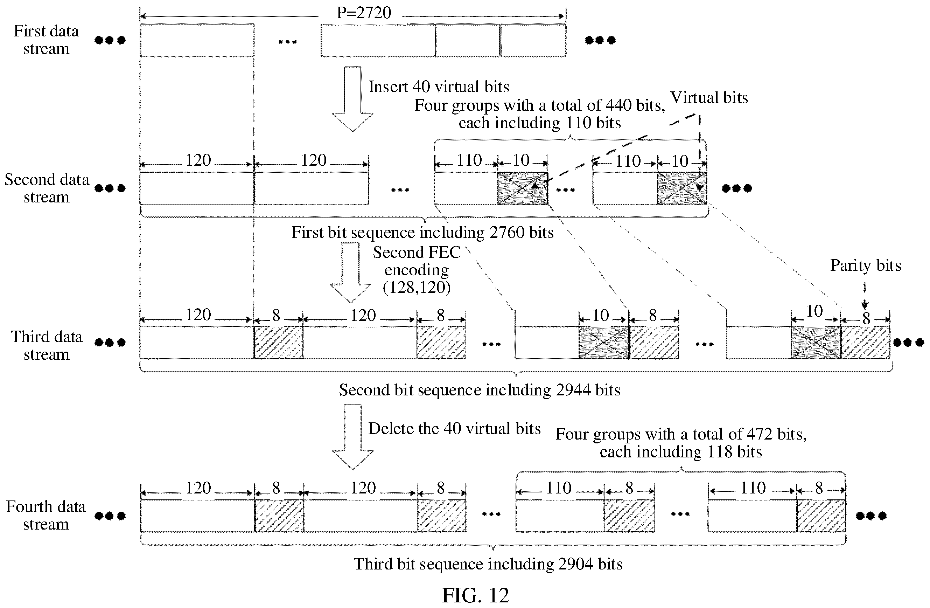

FIG. 12 is a diagram of another data stream structure change that is based on a data processing method according to an embodiment of this application. As shown in FIG. 12, in some specific embodiments, 40-bit virtual bits may be distributed in last four 120-bit groups in a first bit sequence, and are located at last 10 bits in the 120-bit groups.

It should be noted that, in some possible scenarios, the W=40 padded virtual bits in the first bit sequence may be all 0, or may be preset random bits. In some other possible scenarios, the W=40 virtual sequences are located before the P = 2720 bits. In still some other possible scenarios, the W=40 virtual sequences are located after the P = 2720 bits.

In yet some other possible scenarios, the W = 40 virtual bits are not all consecutively arranged in the first bit sequence. The first bit sequence of the L bits includes the b = 23 bit groups, and each of the bit groups includes the K=120 bits. The W = 40 virtual bits may be distributed in $\hat{b}$ bit groups, and each of the $\hat{b}$ bit groups includes W/$\hat{b}$ virtual bits, where $\hat{b}$ < b. In some specific scenarios, the W = 40 virtual bits are distributed in first $\hat{b}$ bit groups in the first bit sequence. In some other specific scenarios, the W = 40 virtual bits are distributed in last $\hat{b}$ bit groups in the first bit sequence.

It should be noted that the W/$\hat{b}$ virtual bits included in each bit group of the $\hat{b}$ bit groups may be located at first W/$\hat{b}$ bits in K bits of the bit group, or may be located at last W/$\hat{b}$ bits in K bits of the bit group.

(2) When a=727, a corresponding baud rate is 113.59375 GBaud. In this case, $W = \frac{120a - 87040}{a - 680} \times b = \frac{200 \times b}{47}$, where a value of b may be an integer multiple of 47, that is, b=47, 94, .... A corresponding value of W may be obtained as a corresponding positive integer according to $W = \frac{200 \times b}{47}$, that is, W=200, 400, ....

(3) When a=728, a corresponding baud rate is 113.75 GBaud. In this case, $W = \frac{120a - 87040}{a - 680} \times b = \frac{20 \times b}{3}$, where a value of b may be an integer multiple of 3, that is, b=3, 6, 9, .... A corresponding value of W may be obtained as a corresponding positive integer according to $W = \frac{20 \times b}{3}$, that is, W=20, 40, 60, ....

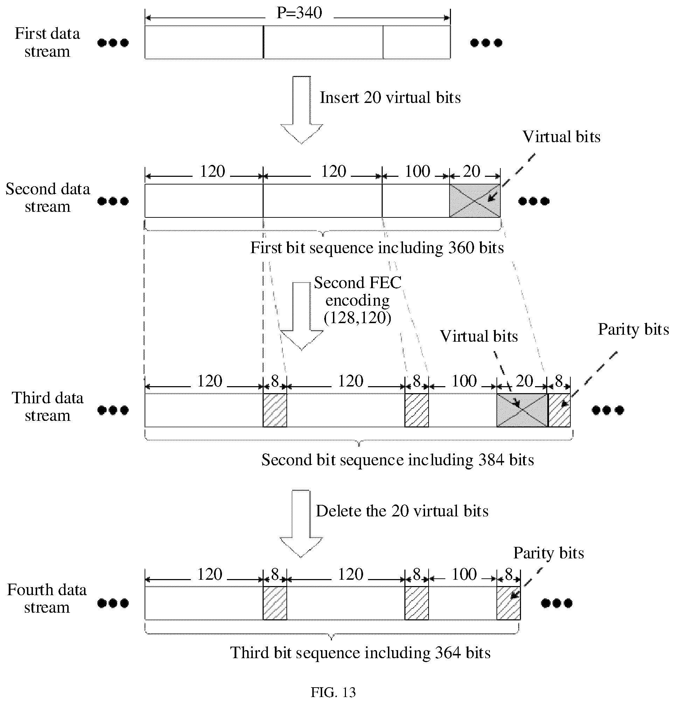

FIG. 13 is a diagram of another data stream structure change that is based on a data processing method according to an embodiment of this application. As shown in FIG. 13, b=3 and W=20. First data processing is performed on a first data stream obtained through first forward error correction FEC encoding (outer-code encoding) to obtain a second data stream, where each second data stream includes at least one first bit sequence, the first bit sequence includes L=P+W=340+20=360 bits, the P=340 bits in the first bit sequence are from the first data stream, the W=20 bits in the first bit sequence are padded virtual bits, the virtual bits are located at last W consecutive bits of the first bit sequence, the first bit sequence includes b=3 bit groups, and each of the bit groups includes K=120 bits. Second FEC (128,120) encoding is performed on the second data stream to obtain a third data stream, where a second bit sequence is obtained by performing second FEC encoding on each first bit sequence, the second bit sequence includes b=3 codewords of a total of N × b = 128 × 3 = 384 bits, and the b=3 codewords in the second bit sequence are obtained by separately performing second FEC encoding on the b=3 bit groups that separately include the 120 bits in the first bit sequence. Second data processing is performed on the third data stream to obtain a fourth data stream, where a third bit sequence is obtained by performing second data processing on each second bit sequence, and the third bit sequence includes M = N × b - W = 364 remaining bits other than the virtual bits in the second bit sequence.

It should be noted that, in some possible scenarios, the W=20 padded virtual bits in the first bit sequence may be all 0, or may be preset random bits. In some other possible scenarios, the W=20 virtual sequences are located before the P = 340 bits. In still some other possible scenarios, the W=20 virtual sequences are located after the P = 340 bits.

The first bit sequence of the L=360 bits includes the b = 3 bit groups, and each of the bit groups includes the K=120 bits. In some possible scenarios, the W = 20 virtual bits are distributed in $\hat{b}$ bit groups, and each of the $\hat{b}$ bit groups includes W/$\hat{b}$ virtual bits, where $\hat{b}$ < 3. In some specific scenarios, the W = 20 virtual bits are distributed in first $\hat{b}$ bit groups in the first bit sequence. In some other specific scenarios, the W = 20 virtual bits are distributed in last $\hat{b}$ bit groups in the first bit sequence.

It should be noted that the W/$\hat{b}$ virtual bits included in each bit group of the $\hat{b}$ bit groups may be located at first W/$\hat{b}$ bits in K bits of the bit group, or may be located at last W/$\hat{b}$ bits in K bits of the bit group.

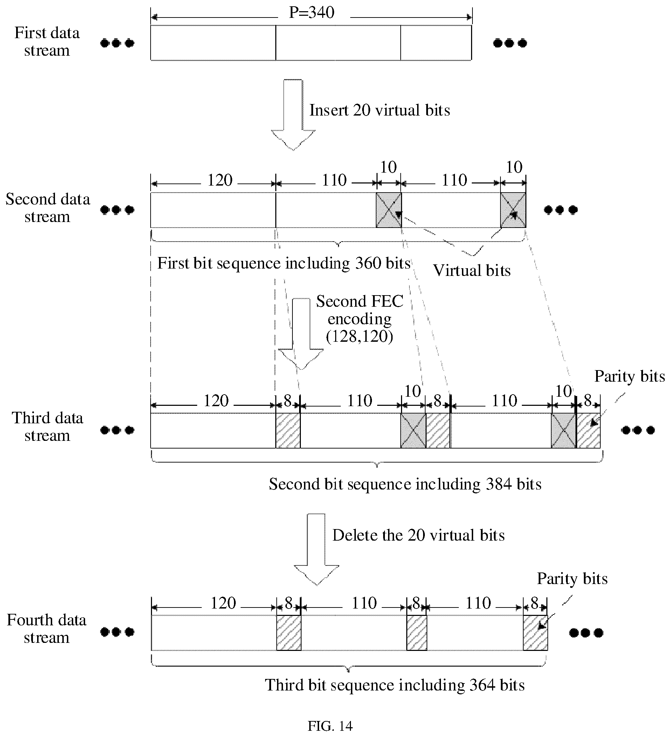

FIG. 14 is a diagram of another data stream structure change that is based on a data processing method according to an embodiment of this application. As shown in FIG. 14, W = 20 virtual bits are not all consecutively arranged in a first bit sequence, and the 20-bit virtual bits are distributed in last two 120-bit groups in the first bit sequence, and are located at last 10 bits in the 120-bit groups. It should be noted that, in some possible scenarios, "inserting W padded virtual bits into P bits to obtain a first bit sequence, performing second FEC encoding to obtain a second bit sequence of N × b bits, and then deleting the W padded virtual bits from the second bit sequence to obtain a third bit sequence of M = N × b - W bits" may be referred to as performing third FEC encoding (M,P), where an information length of the third FEC encoding is P bits, and a codeword length of the third FEC encoding is M = N × b - W bits. More specifically, when b=3 and W=20, the information length of the third FEC encoding is P=340 bits, and the codeword length of the third FEC encoding is M = 364 bits.

It should be noted that, in some other possible scenarios, "inserting W padded virtual bits into P bits to obtain a first bit sequence, performing second FEC encoding to obtain a second bit sequence of N × b bits, and then deleting the W padded virtual bits from the second bit sequence to obtain a third bit sequence of M = N × b - W bits" are equivalent to the following operations:

Step 1: Periodically obtain P bits from each first data stream, where the P bits include b to-be-encoded subsequences, a quantity of bits of an $i^{th}$ to-be-encoded subsequence is $K_i$, $0 \le i < b$, and $K_0 + K_1 + K_2 + \cdots + K_{b-1} =$ P. The quantity $K_i$ of bits of the $i^{th}$ to-be-encoded subsequence is not greater than a bit length K of the second FEC encoding, that is, $K_i \le K$, and K × b - P = W.

Step 2: Perform data processing on the P bits to obtain a third bit sequence of M bits, where the third bit sequence includes b encoded sub-codewords, a quantity of bits of an $i^{th}$ encoded sub-codeword is $N_i$ = N - K + $K_i$, $0 \le i < b$, N is a codeword length of the second FEC encoding, and the $i^{th}$ encoded sub-codeword is obtained by performing $i^{th}$ FEC sub-encoding ($N_i$, $K_i$) on the $i^{th}$ to-be-encoded subsequence.

Further, $i^{th}$ FEC sub-encoding ($N_i$, $K_i$) is obtained by shortening second FEC encoding (N, K) by K - $K_i$ bits. To be specific, an operation of performing $i^{th}$ FEC sub-encoding ($N_i$, $K_i$) on $K_i$ bits to obtain a codeword with a bit length $N_i$ is equivalent to first adding (padding) K - $K_i$ 0 bits to the $K_i$ bits to obtain K bits, then performing second FEC encoding (N, K) on the K bits to obtain encoded bits with a bit length N, and finally deleting the added K - $K_i$ 0 bits from the encoded bits with the length N to obtain the codeword with the bit length $N_i$ = N - (K - $K_i$).

More specifically, the W virtual bits are distributed in $\hat{b}$ bit groups, and each of the $\hat{b}$ bit groups includes W/$\hat{b}$ virtual bits, where $\hat{b} < b$. Values of b - $\hat{b}$ numbers in b to-be-encoded subsequence lengths {$K_0$, $K_1$, $K_2$, ... , $K_{b-1}$} in the P bits are K=120, and values of $\hat{b}$ remaining numbers are all W/$\hat{b}$. In this case, there are two types of FEC sub-encoding ($N_i$, $K_i$). One type is second FEC encoding (128,120), and the other type is FEC sub-encoding (128 - W/$\hat{b}$, 120 - W/$\hat{b}$). In some specific scenarios, the FEC sub-encoding (128 - W/$\hat{b}$, 120 - W/$\hat{b}$) is obtained by shortening the second FEC encoding (N, K) by W/$\hat{b}$ bits.

In some specific embodiments, b=3 and W=20. The W = 20 virtual bits are distributed in $\hat{b}$ = 1 bit group, and the bit group includes W/$\hat{b}$=20 virtual bits. Values of 2 numbers in 3 to-be-encoded subsequence lengths {$K_0$,$K_1$,$K_2$} in the P=340 bits are K=120, and a value of 1 remaining number is 100. For example, $K_0$ = 120, $K_1$ = 120, and $K_2$ = 100. For another example, $K_0$ = 100, $K_1$ = 120, and $K_2$ = 120. In this case, there are two types of FEC sub-encoding ($N_i$, $K_i$). One type is second FEC encoding (128,120), and the other type is FEC sub-encoding (108,100). In some specific scenarios, the FEC sub-encoding (108,100) is obtained by shortening the second FEC encoding (128,120) by 20 bits. More specifically, in some other specific scenarios, the encoding scheme shown in FIG. 9 is used for the second FEC encoding (128,120), and an encoding scheme of FEC sub-encoding (108,100) is as follows:

To-be-encoded 100-bit data is represented as B[99:0], bitwise exclusive OR is performed on every two consecutive bits of the to-be-encoded 100-bit data to obtain 1-bit data C[i], and 50-bit data is obtained in total, and is represented as C[49:0], where C[i]=B[2*i]^B[2*i+1], and $0 \le i \le 49$. Then, C[49:0] is used as information data to perform Hamming (58,50) encoding to obtain 8-bit parity data, and the 8-bit parity data is represented as P[7:0]. Finally, a total of 108 bits: B[99:0] and P[7:0] are concatenated into an output of the FEC sub-encoding (108,100), and the output is represented as D[107:0]. D[99:0] is from B[99:0], and D[107:100] is from P[7:0].

In some actual scenarios, a Hamming Hamming (58,50) code is also referred to as a single extended Hamming Extended Hamming (58,50) code, and is obtained by shortening an extended Hamming Extended Hamming (128,120) code by 70 bits. In some other actual scenarios, a Hamming Hamming (58,50) code is a double extended Hamming Double Extended Hamming (58,50) code. It should be noted that the single extended Hamming code and the double extended Hamming code in this application are also referred to as Hamming Hamming codes for short.

In some other specific embodiments, b=3 and W=20. The W = 20 virtual bits are distributed in $\hat{b}$ = 2 bit groups, and each of the two bit groups includes W/$\hat{b}$=10 virtual bits. A value of one number in 3 to-be-encoded subsequence lengths {$K_0$, $K_1$, $K_2$} in the P=340 bits is K=120, and values of two remaining numbers are 110. For example, $K_0$ = 120, $K_1$ = 110, and $K_2$ = 110. For another example, $K_0$ = 110, $K_1$ = 110, and $K_2$ = 120. In this case, there are two types of FEC sub-encoding ($N_i$, $K_i$). One type is second FEC encoding (128,120), and the other type is FEC sub-encoding (118,110). In some specific scenarios, the FEC sub-encoding (118,110) is obtained by shortening the second FEC encoding (128,120) by 10 bits. More specifically, in some other specific scenarios, the encoding scheme shown in FIG. 9 is used for the second FEC encoding (128,120), and an encoding scheme of the FEC sub-encoding (118,110) is as follows:

To-be-encoded 110-bit data is represented as B[109:0], bitwise exclusive OR is performed on every two consecutive bits of the to-be-encoded 110-bit data to obtain 1-bit data C[i], and 55-bit data is obtained in total, and is represented as C[54:0], where C[i]=B[2*i]^B[2*i+1], and $0 \le i \le 54$. Then, C[54:0] is used as information data to perform Hamming (63,55) encoding to obtain 8-bit parity data, and the 8-bit parity data is represented as P[7:0]. Finally, a total of 118 bits: B[109:0] and P[7:0] are concatenated into an output of the FEC sub-encoding (118,110), and the output is represented as D[117:0]. D [109:0] is from B[109:0], and D[117:110] is from P[7:0].

In some actual scenarios, a Hamming Hamming (63,55) code is also referred to as a single extended Hamming Extended Hamming (63,55) code, and is obtained by shortening an extended Hamming Extended Hamming (128,120) code by 65 bits. In some other actual scenarios, a Hamming Hamming (63,55) code is a double extended Hamming Double Extended Hamming (63,55) code. It should be noted that the single extended Hamming code and the double extended Hamming code in this application are also referred to as Hamming Hamming codes for short.

(4) When a=729, a corresponding baud rate is 113.90625 GBaud. In this case, $W = \frac{120a-87040}{a-680} \times b = \frac{440 \times b}{49}$, where a value of b may be an integer multiple of 49, that is, b=49, 98, .... A corresponding value of W may be obtained as a corresponding positive integer according to $W = \frac{440 \times b}{49}$, that is, W=440, 880, ....

The foregoing inner code information length is K=120 bits, and one RS symbol of an outer KP4 code includes 10 bits. To achieve better performance of a concatenated FEC solution, a convolutional interleaving operation is further performed after the operation of inserting the W virtual bits and before the second FEC encoding (inner-code encoding) operation. For a convolutional interleaver between the inner-code encoding and the outer-code encoding, there is a convolutional interleaver whose input and output switches are at a topmost position each time the convolutional interleaver outputs 120 bits. For example, a quantity r of delay lines of the convolutional interleaver is 3, and each storage unit of the convolutional interleaver stores d=40 bits. For another example, a quantity r of delay lines of the convolutional interleaver is 6, and each storage unit of the convolutional interleaver stores d=20 bits. In this case, the receiver processing module may implement frame synchronization with low complexity, and the frame synchronization of received data may ensure inner codeword synchronization and convolutional de-interleaving synchronization, that is, obtain boundaries of an inner codeword and positions of input and output switches (input and output switches) of convolutional de-interleaving. This simplifies operations such as the frame synchronization, the inner codeword synchronization, and concatenated interleaving synchronization of the receiver, and achieves low implementation complexity.

Further, the first bit sequence includes b bit groups, and each of the bit groups includes K=120 bits. The W virtual bits are distributed in $\hat{b}$ bit groups in the first bit sequence, and each of the $\hat{b}$ bit groups includes W/$\hat{b}$ virtual bits, where $\hat{b}$ < b. In some specific implementations, the quantity W/$\hat{b}$ of virtual bits included in each of the $\hat{b}$ bit groups is equal to a quantity d of bits stored in the storage unit in the convolutional interleaver, that is, W/$\hat{b}$ =

d. This facilitates hardware implementation of an overall concatenated FEC solution. In some other specific embodiments, $\hat{b}$ = 1, that is, the W virtual bits are distributed in 1 bit group in the first bit sequence. In this case, W= d.

Implementation 2: An FEC code with an information length K=140 bits and a codeword length N=148 bits is used for inner-code encoding.

It is considered that the FEC code with the information length K=140 bits and the codeword length N=148 bits is used for an inner code. For example, Hamming (148,140) is used.

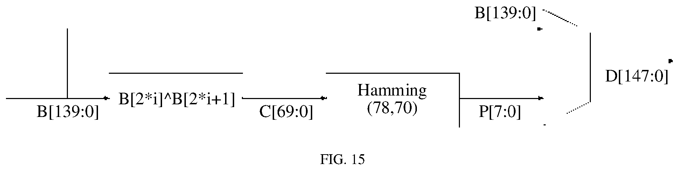

FIG. 15 is a diagram of another implementation of inner-code encoding according to an embodiment of this application. For another example, the encoding scheme shown in FIG. 15 is used. To-be-encoded 140-bit data is represented as B[139:0], bitwise exclusive OR is performed on every two consecutive bits of the to-be-encoded 140-bit data to obtain 1-bit data C[i], and 70-bit data is obtained in total, and is represented as C[69:0], where C[i]=B[2*i]^B[2*i+1], and $0 \leq i \leq 69$. Then, C[69:0] is used as information data to perform Hamming (78,70) encoding to obtain 8-bit parity data, and the 8-bit parity data is represented as P[7:0]. Finally, a total of 148 bits: B [139:0] and P[7:0] are concatenated into an output of the inner-code encoding, and the output is represented as D [147:0]. D[139:0] is from B[139:0], and D[147:140] is from P[7:0]. In some actual scenarios, a Hamming Hamming (78,70) code is also referred to as an extended Hamming Extended Hamming (78,70) code, and is obtained by shortening an extended Hamming Extended Hamming (128,120) code by 50 bits. It should be noted that a single extended Hamming code and a double extended Hamming code in this application are also referred to as Hamming Hamming codes for short.

Considering the 800GbE scenario, the transmitter device performs outer-code encoding on to-be-transmitted 800GbE service data streams by using a KP4 RS (544,514) code to obtain data streams with a total rate of 850 Gbps, performs PMA processing, and sends processed data streams to the transmitter processing module through an attachment unit interface 800GAUI. The transmitter processing module processes the m first data streams according to the method shown in FIG. 4 to obtain four PAM4 modulated symbol streams. It is assumed that a value $\frac{850}{2 \times 4} \times \frac{b \times N-W}{b \times K-W}$ Gbaud of a baud rate is an integer multiple of an Ethernet common reference clock frequency 156.25 MHz, that is, $\frac{850}{2 \times 4} \times \frac{b \times N-W}{b \times K-W} G = 156.25 \times aM$, where a is a positive integer. It can be learned that $a = 680 \times \frac{b \times N-W}{b \times K-W}$, and is an integer. In this case, implementation of clock extraction and clock synchronization of the receiver is simple, fast phase locking can be implemented, and low PLL complexity and low jitter are achieved.

In this embodiment, K=140 and N=148. In this

case, $W = \frac{140a-100640}{a-680} \times b$. In this embodiment, it is mainly considered that the baud rate is less than 114 GBaud. Therefore, a value range of a is {720, 721, 722, 723, 724, 725, 726, 727, 728}. The following separately describes different values of a.

(1) When a=720, a corresponding baud rate is 112.5 GBaud. In this case, $W = \frac{140a-100640}{a-680} \times b = 4 \times b$. In some specific application scenarios, a value of W is an integer multiple of 10.

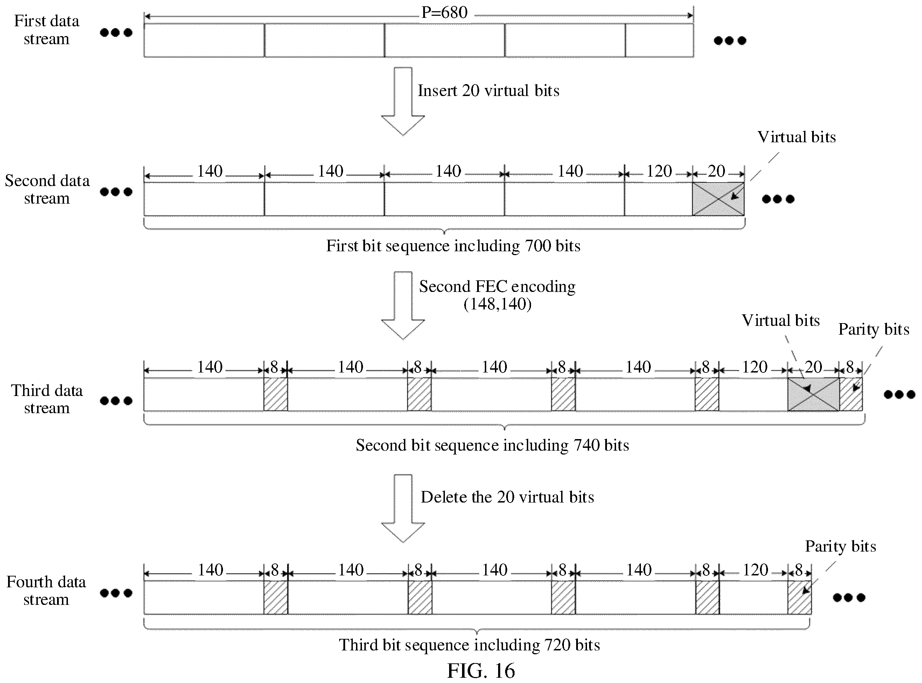

FIG. 16 is a diagram of another data stream structure change that is based on a data processing method according to an embodiment of this application. As shown in FIG. 16, b=5 and W=20. First data processing is performed on a first data stream obtained through first forward error correction FEC encoding (outer-code encoding) to obtain a second data stream, where each second data stream includes at least one first bit sequence, the first bit sequence includes L=P+W=680+20=700 bits, the P=680 bits in the first bit sequence are from the first data stream, the W=20 bits in the first bit sequence are padded virtual bits, the virtual bits are located at last W=20 consecutive bits of the first bit sequence, the first bit sequence includes b=5 bit groups, and each of the bit groups includes K=140 bits. Second FEC (148,140) encoding is performed on the second data stream to obtain a third data stream, where a second bit sequence is obtained by performing second FEC encoding on each first bit sequence, the second bit sequence includes b=5 codewords of a total of N × b = 148 × 5 = 740 bits, and the b=5 codewords in the second bit sequence are obtained by separately performing second FEC encoding on the b=5 bit groups that separately include the 140 bits in the first bit sequence. Second data processing is performed on the third data stream to obtain a fourth data stream, where a third bit sequence is obtained by performing second data processing on each second bit sequence, and the third bit sequence includes M = N × b - W = 720 remaining bits other than the virtual bits in the second bit sequence.

It should be noted that, in some possible scenarios, the W=20 padded virtual bits in the first bit sequence may be all 0, or may be preset random bits. In some other possible scenarios, the W=20 virtual sequences are located before the P = 680 bits. In still some other possible scenarios, the W=20 virtual sequences are located after the P = 680 bits.

The first bit sequence of the L=700 bits includes the b = 5 bit groups, and each of the bit groups includes the K=140 bits. In some possible scenarios, the W = 20 virtual bits are distributed in $\hat{b}$ bit groups, and each of the $\hat{b}$ bit groups includes W/$\hat{b}$ virtual bits, where b < 5. In some specific scenarios, the W = 20 virtual bits are distributed in first $\hat{b}$ bit groups in the first bit sequence. In some other specific scenarios, the W = 20 virtual bits are distributed in last $\hat{b}$ bit groups in the first bit sequence.

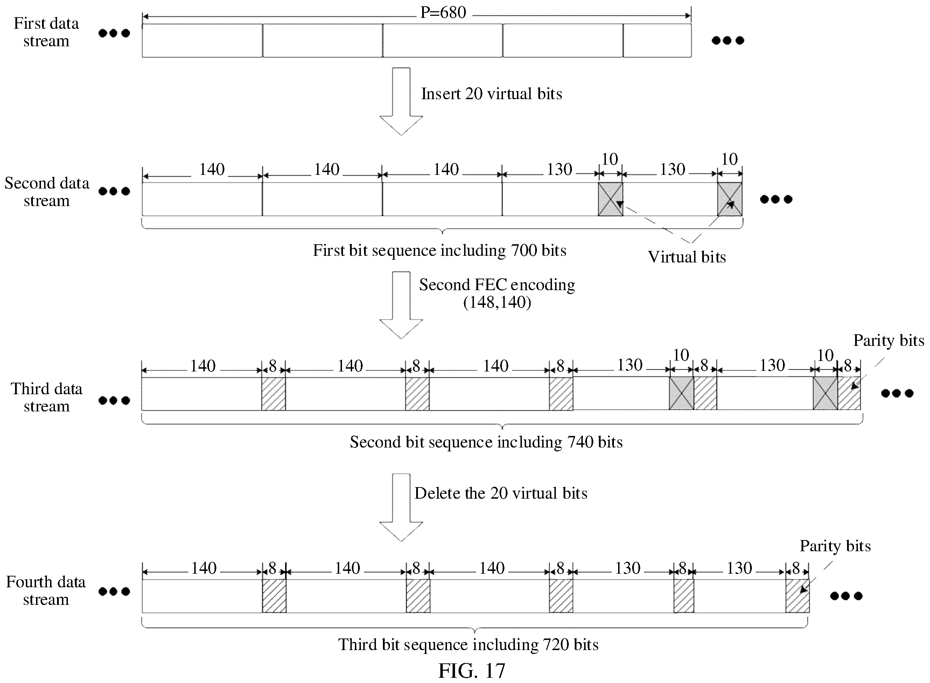

FIG. 17 is a diagram of another data stream structure change that is based on a data processing method according to an embodiment of this application. As shown in FIG. 17, in some other possible scenarios, W = 20 virtual bits are not all consecutively arranged in a first bit sequence, and the 20-bit virtual bits are distributed in last two bit groups in the first bit sequence, and are located at last 10 bits in the last two bit groups in the first bit sequence.

It should be noted that, in some possible scenarios, "inserting W padded virtual bits into P bits to obtain a first bit sequence, performing second FEC encoding to obtain a second bit sequence of N × b bits, and then deleting the W padded virtual bits from the second bit sequence to obtain a third bit sequence of M = N × b - W bits" may be referred to as performing third FEC encoding (M,P), where an information length of the third FEC encoding is P bits, and a codeword length of the third FEC encoding is M = N × b - W bits. More specifically, when b=5 and W=20, the information length of the third FEC encoding is P=680 bits, and the codeword length of the third FEC encoding is M = 720 bits.

It should be noted that, in some other possible scenarios, "inserting W padded virtual bits into P bits to obtain a first bit sequence, performing second FEC encoding to obtain a second bit sequence of N × b bits, and then deleting the W padded virtual bits from the second bit sequence to obtain a third bit sequence of M = N × b - W bits" are equivalent to the following operations:

Step 1: Periodically obtain P bits from each first data stream, where the P bits include b to-be-encoded subsequences, a quantity of bits of an $i^{th}$ to-be-encoded subsequence is $K_i$, $0 \leq i < b$, and $K_0 + K_1 + K_2 + \cdots + K_{b-1} =$ P. The quantity $K_i$ of bits of the $i^{th}$ to-be-encoded subsequence is not greater than a bit length K of the second FEC encoding, that is, $K_i \leq K$, and K × b - P = W.

Step 2: Perform data processing on the P bits to obtain a third bit sequence of M bits, where the third bit sequence includes b encoded sub-codewords, a quantity of bits of an $i^{th}$ encoded sub-codeword is $N_i = N - K + K_i$, $0 \leq i < b$, N is a codeword length of the second FEC encoding, and the $i^{th}$ encoded sub-codeword is obtained by performing $i^{th}$ FEC sub-encoding $(N_i, K_i)$ on the $i^{th}$ to-be-encoded subsequence.

Further, $i^{th}$ FEC sub-encoding $(N_i, K_i)$ is obtained by shortening second FEC encoding (N, K) by K - $K_i$ bits. To be specific, an operation of performing $i^{th}$ FEC sub-encoding $(N_i, K_i)$ on $K_i$ bits to obtain a codeword with a bit length $N_i$ is equivalent to first adding (padding) K - $K_i$ 0 bits to the $K_i$ bits to obtain K bits, then performing second FEC encoding (N, K) on the K bits to obtain encoded bits with a bit length N, and finally deleting the added K - $K_i$ 0 bits from the encoded bits with the length N to obtain the codeword with the bit length $N_i = N - (K - K_i)$.

More specifically, the W virtual bits are distributed in $\hat{b}$ bit groups, and each of the $\hat{b}$ bit groups includes W/b̂ virtual bits, where b̂ < b. Values of b - b̂ numbers in b to-be-encoded subsequence lengths $\{K_0, K_1, K_2, ..., K_{b-1}\}$ in the P bits are K=140, and values of b̂ remaining numbers are all W/b̂. In this case, there are two types of FEC sub-encoding $(N_i, K_i)$. One type is second FEC encoding (148,140), and the other type is FEC sub-encoding (148 - W/b̂, 140 - W/b̂). In some specific scenarios, the FEC sub-encoding (148 - W/b̂, 140 - W/b̂) is obtained by shortening the second FEC encoding (N, K) by W/b̂ bits.

In some specific embodiments, b=5 and W=20. The W = 20 virtual bits are distributed in b̂ = 1 bit group, and the bit group includes W/b̂=20 virtual bits. Values of 4 numbers in 5 to-be-encoded subsequence lengths $\{K_0, K_1, K_2, K_3, K_4\}$ in the P=680 bits are K=140, and a value of 1 remaining number is 120. For example, $K_0 = 140$, $K_1 = 140$, $K_2 = 140$, $K_3 = 140$, and $K_4 = 120$. For another example, $K_0 = 120$, $K_1 = 140$, $K_2 = 140$, $K_3 = 140$, and $K_4 = 140$. In this case, there are two types of FEC sub-encoding $(N_i, K_i)$. One type is second FEC encoding (148,140), and the other type is FEC sub-encoding (128,120). In some specific scenarios, the FEC sub-encoding (128,120) is obtained by shortening the second FEC encoding (148, 140) by 20 bits. More specifically, in some other specific scenarios, the encoding scheme shown in FIG. 15 is used for second FEC encoding (148,140), and the encoding scheme shown in FIG. 9 is used for an encoding scheme of FEC sub-encoding (128,120).

In some other specific embodiments, b=5 and W=20. The W = 20 virtual bits are distributed in b̂ = 2 bit groups, and each of the two bit groups includes W/b̂=10 virtual bits. Values of 3 numbers in 5 to-be-encoded subsequence lengths $\{K_0, K_1, K_2, K_3, K_4\}$ in the P=680 bits are K=140, and values of 2 remaining numbers are 130. For example, $K_0 = 140$, $K_1 = 140$, $K_2 = 140$, $K_3 = 130$, and $K_4 = 130$. For another example, $K_0 = 130$, $K_1 = 130$, $K_2 = 140$, $K_3 = 140$, and $K_4 = 140$. In this case, there are two types of FEC sub-encoding $(N_i, K_i)$. One type is second FEC encoding (148,140), and the other type is FEC sub-encoding (138,130). In some specific scenarios, the FEC sub-encoding (138,130) is obtained by shortening the second FEC encoding (148,140) by 10 bits. More specifically, in some other specific scenarios, the encoding scheme shown in FIG. 15 is used for second FEC encoding (148,140), and an encoding scheme of FEC sub-encoding (138,130) is as follows:

To-be-encoded 130-bit data is represented as B[129:0], bitwise exclusive OR is performed on every two consecutive bits of the to-be-encoded 130-bit data to obtain 1-bit data C[i], and 65-bit data is obtained in total, and is represented as C[64:0], where C[i]=B[2*i]^B[2*i+1], and $0 \leq i \leq 64$. Then, C[64:0] is used as information data to perform Hamming (73,65) encoding to obtain 8-bit parity data, and the 8-bit parity data is represented as P[7:0]. Finally, a total of 138 bits: B[129:0] and P[7:0] are concatenated into an output of the FEC sub-encoding (138,130), and the output is represented as D[137:0]. D[129:0] is from B[129:0], and D[137:130] is from P[7:0].

In some actual scenarios, a Hamming Hamming (73,65) code is also referred to as a single extended Hamming Extended Hamming (73,65) code, and is obtained by shortening an extended Hamming Extended Hamming (128,120) code by 55 bits. It should be noted that the single extended Hamming code and a double extended Hamming code in this application are also referred to as Hamming Hamming codes for short.

(2) When a=722, a corresponding baud rate is 112.8125 GBaud. In this case, $W = \frac{140a - 100640}{a - 680} \times b = \frac{220 \times b}{21}$, where a value of b may be an integer multiple of 21, that is, b=21, 42, .... A corresponding value of W may be obtained as a corresponding positive integer according to $W = \frac{220 \times b}{21}$, that is, W=220, 440, ....

(3) When a=724, a corresponding baud rate is 113.125 GBaud. In this case, $W = \frac{140a - 100640}{a - 680} \times b = \frac{180 \times b}{11}$, where a value of b may be an integer multiple of 11, that is, b=11, 22, .... A corresponding value of W may be obtained as a corresponding positive integer according to $W = \frac{180 \times b}{11}$, that is, W=180, 360, ....

(4) When a=726, a corresponding baud rate is 113.4375 GBaud. In this case, $W = \frac{140a - 100640}{a - 680} \times b = \frac{500 \times b}{23}$, where a value of b may be an integer multiple of 23, that is, b=23, 46, .... A corresponding value of W may be obtained as a corresponding positive integer according to $W = \frac{500 \times b}{23}$, that is, W=500, 1000, ....

(5) When a=728, a corresponding baud rate is 113.75 GBaud. In this case, $W = \frac{140a - 100640}{a - 680} \times b = \frac{80 \times b}{3}$, where a value of b may be an integer multiple of 3, that is, b=3, 6, .... A corresponding value of W may be obtained as a corresponding positive integer according to $W = \frac{80}{3} * b$, that is, W=80, 160, ....

The foregoing inner code information length is K=140 bits, and one RS symbol of an outer KP4 code includes 10 bits. To achieve better performance of a concatenated FEC solution, a convolutional interleaving operation is further performed after the operation of inserting the W virtual bits and before the second FEC encoding (inner-code encoding) operation. For a convolutional interleaver between the inner-code encoding and the outer-code encoding, there is a convolutional interleaver whose input and output switches are at a topmost position each time the convolutional interleaver outputs 140 bits. For example, a quantity r of delay lines of the convolutional interleaver is 7, and each storage unit of the convolutional interleaver stores d=20 bits. In this case, the receiver processing module may implement frame synchronization with low complexity, and the frame synchronization of received data may ensure inner codeword synchronization and convolutional de-interleaving synchronization, that is, obtain boundaries of an inner codeword and positions of input and output switches (input and output switches) of convolutional de-interleaving. This simplifies operations such as the frame synchronization, the inner codeword synchronization, and concatenated interleaving synchronization of the receiver, and achieves low implementation complexity.

To achieve better performance of a concatenated FEC solution, a convolutional interleaving operation is further performed before the second FEC encoding (inner-code encoding) operation. In some specific scenarios, before the operation of inserting the W virtual bits, convolutional interleaving is further performed on the first data stream. Then, the P bits are periodically obtained from the first data stream, the W virtual bits are inserted, and then the second FEC encoding is performed. For the convolutional interleaver between the inner-code encoding and the outer-code encoding, there is a convolutional interleaver whose input and output switches are at a topmost position each time the convolutional interleaver outputs f bits, where P is divisible by f.

In some specific scenarios, N=148, K=140, b=20, and W=80 are considered. First data processing is performed on a first data stream obtained through first forward error correction FEC encoding (outer-code encoding) to obtain a second data stream, where each second data stream includes at least one first bit sequence, the first bit sequence includes L=P+W=2720+80=2800 bits, the P=2720 bits in the first bit sequence are from the first data stream, the W=80 bits in the first bit sequence are padded virtual bits, the first bit sequence includes b=20 bit groups, and each of the bit groups includes K=140 bits. Second FEC (148,140) encoding is performed on the second data stream to obtain a third data stream, where a second bit sequence is obtained by performing second FEC encoding on each first bit sequence, the second bit sequence includes b=20 codewords of a total of $N \times b = 148 \times 20 = 2960$ bits, and the b=20 codewords in the second bit sequence are obtained by separately performing second FEC encoding on the b=20 bit groups that separately include the 140 bits in the first bit sequence. Second data processing is performed on the third data stream to obtain a fourth data stream, where a third bit sequence is obtained by performing second data processing on each second bit sequence, and the third bit sequence includes $M = N \times b - W = 2880$ remaining bits other than the virtual bits in the second bit sequence.

The first bit sequence of the L=2800 bits includes the b = 20 bit groups, and each of the bit groups includes the K=140 bits. In some possible scenarios, the W = 80 virtual bits are distributed in $\hat{b}$ bit groups, and each of the $\hat{b}$ bit groups includes W/$\hat{b}$ virtual bits, where $\hat{b} < 20$. In some specific scenarios, the W = 80 virtual bits are distributed in first $\hat{b}$ bit groups in the first bit sequence. In some other specific scenarios, the W = 80 virtual bits are distributed in last $\hat{b}$ bit groups in the first bit sequence.

It should be noted that the W/$\hat{b}$ virtual bits included in each bit group of the $\hat{b}$ bit groups may be located at first W/$\hat{b}$ bits in K bits of the bit group, or may be located at last W/$\hat{b}$ bits in K bits of the bit group.

In a specific implementation, input and output switches of the convolutional interleaver and the convolutional de-interleaver are at topmost positions each time the convolutional interleaver and the convolutional de-interleaver output f = P = 2720 bits. In this case, synchronization of the convolutional de-interleaver can be ensured during frame synchronization. A specific convolutional interleaver is as follows: A quantity r of delay lines of the convolutional interleaver is 4, and each storage unit of the convolutional interleaver stores d=40 bits. In this case, the receiver processing module may implement frame synchronization with low complexity, and the frame synchronization of received data may ensure inner codeword synchronization and convolutional de-interleaving synchronization, that is, obtain boundaries of an inner codeword and positions of input and output switches (input and output switches) of convolutional de-interleaving. This simplifies operations such as the frame synchronization, the inner codeword synchronization, and concatenated interleaving synchronization of the receiver, and achieves low implementation complexity.

It should be noted that, according to the data processing method applied to the transmitter shown in FIG. 4, correspondingly, the data processing method applied to the receiver includes the following steps. First, fourth data processing is performed on received Y modulated symbol streams to obtain m fifth data streams. For a feature and a generation manner of the modulated symbol stream, refer to the related descriptions in the embodiment shown in FIG. 4. Details are not described herein again. The fourth data processing including demodulation is performed on the Y modulated symbol streams to obtain the m fifth data streams, where the fourth data processing performed by the receiver is an inverse operation of the third data processing performed by the transmitter. Then, frame synchronization is performed on each fifth data stream. It should be understood that, the receiver performs frame synchronization, to determine boundaries (boundaries) of each frame ($M=N \times b-W$ bits) in the fifth data stream, and implement inner codeword synchronization.

It should be understood that, after completing the frame synchronization, the receiver processing module 04 or the receiver device 05 further performs fifth data processing on the m fifth data streams. The fifth data processing may include inverse operations of first data processing, second FEC encoding, and second data processing that are performed by the transmitter processing module 02 or the transmitter device 01. For example, the inverse operation of the second FEC encoding is inner-code decoding. Specific implementations of the inverse operations are not described one by one herein again.

It should be noted that the first data processing method described in the embodiment shown in FIG. 4 is: first inserting a virtual bit into a data stream, then performing inner-code encoding, and deleting the virtual bit after the inner-code encoding, to obtain a modulated symbol stream through modulation. In addition, this application further provides a second data processing method: Inner-code encoding is first performed on a data stream, and then a part of bits are deleted after the inner-code encoding, to obtain a modulated symbol stream through modulation. The following describes in detail the second data processing method.

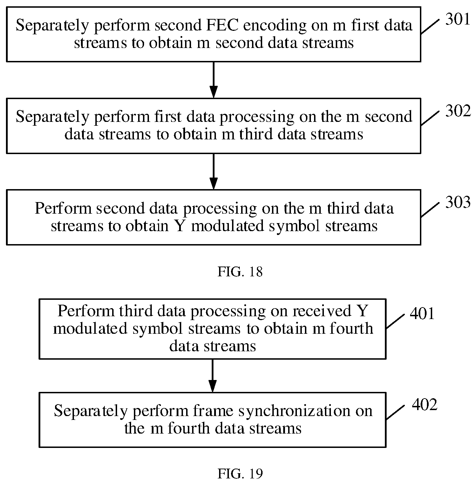

FIG. 18 is another schematic flowchart of a data processing method according to an embodiment of this application. It should be understood that the data processing method is applied to a transmitter. For example, the data processing method may be specifically implemented by the transmitter processing module 02 shown in FIG. 2. For another example, the data processing method may be specifically implemented by the transmitter device 01 shown in FIG. 3.

301: Separately perform second FEC encoding on m first data streams to obtain m second data streams.

In this embodiment, all the m first data streams are data streams obtained through first FEC encoding, namely, outer-code encoded data streams described above. Typically, a value of m is 4, 8, 16, 32, or 64. An RS code may be used for the outer-code encoding, and the outer-code encoded data stream may include a plurality of RS codewords. In actual application, the outer-code encoding may alternatively be performed in another encoding scheme. For ease of description, the RS codeword is used below to uniformly represent a codeword generated through the outer-code encoding. It should be noted that, in this application, a code length of outer code is measured in outer code symbols, and the outer code symbol may include one or more bits. For example, the outer code is a KP4 RS (544,514) code, the code length is 544 symbols, and one RS symbol of the outer code includes 10 bits.

Specifically, the first data stream includes at least one first bit sequence, the second data stream includes at least one second bit sequence, and a corresponding second bit sequence is obtained by performing second FEC encoding on each first bit sequence. The second bit sequence includes b codewords, and b is an integer greater than 1. The second FEC encoding may be understood as the inner-code encoding described above. In an example, an inner-code encoder is used to perform inner-code encoding on every K bits in the first bit sequence, to be specific, add S parity bits to obtain an inner codeword having a total of N bits, that is, $N=K+S$, where $K\geq1$ and $S\geq1$. In other words, each codeword includes N bits, K represents a quantity of information bits in the codeword, and S represents a quantity of parity bits in the codeword. It should be understood that the first bit sequence includes $K\times b$ bits, and the second bit sequence includes $N\times b$ bits.

302: Separately perform first data processing on the m second data streams to obtain m third data streams.

Specifically, the first data processing includes a puncturing (puncturing) operation performed for the second data stream. The third data stream includes at least one third bit sequence, and puncturing is performed for each second bit sequence to obtain a corresponding third bit sequence. The third bit sequence includes H bits in the second bit sequence, where $H=N\times b-F$, and F is an integer greater than or equal to 1. In other words, F bits are punctured from each second bit sequence, and the F bits may also be referred to as punctured bits. It should be noted that specific positions of the punctured bits in the second bit sequence are not limited in this application. In an example, the punctured bits are last F bits of the second bit sequence. In another example, the punctured bits are first F bits of the second bit sequence. In still another example, the punctured bits are not all consecutively arranged in the second bit sequence.

303: Perform second data processing on the m third data streams to obtain Y modulated symbol streams.

In this embodiment, the second data processing including modulation is performed on the m third data streams to obtain the Y modulated symbol streams, where Y is an integer greater than or equal to 1.

In some possible implementations, an operation of the second data processing may further include codeword interleaving or modulated symbol interleaving. The codeword interleaving is disturbing a bit order of a bit stream in the third data stream, and the modulated symbol interleaving is disturbing a symbol order of a modulated symbol stream. It should be noted that the codeword interleaving may be used to disturb an order of a plurality of third data streams and combine the plurality of third data streams into one data stream, and then perform modulation to obtain one modulated symbol stream. The modulated symbol interleaving may be used to modulate the plurality of third data streams, disturb a symbol order, and combine modulated symbol streams into one modulated symbol stream. It should be understood that the codeword interleaving or the modulated symbol interleaving may be used to interleave colored noise in channel transmission and disturb an order, so that quality of a signal recovered at a receiver is good.

In some possible implementations, before the second FEC encoding is performed on the m first data streams, at least one of the following operations may be further performed on the m first data streams: alignment marker lock (alignment lock), lane de-skew (lane de-skew), lane reorder (lane reorder), and the like.

It should be noted that, considering that for an AWGN channel, error bits input into inner-code decoding comply with random distribution, but error bits output from the decoding do not comply with the random distribution, adding a concatenated interleaver between an inner code and the outer code can make performance of an overall concatenated FEC solution better. An operation of concatenated interleaving usually includes convolutional interleaving to achieve a low latency. A specific implementation of the concatenated interleaving includes lane permutation (Lane Permutation) and the convolutional interleaving. In the lane permutation, data permutation is performed on g input data streams to obtain g data streams obtained through the data permutation. Then, the convolutional interleaving is separately performed to obtain g data streams obtained through the convolutional interleaving. Another specific implementation of the concatenated interleaving includes lane multiplexing and the convolutional interleaving. In the lane multiplexing, symbol multiplexing (symbol mux) or bit multiplexing (bit mux) is performed on g input data streams to obtain g1 multiplexed data streams, where g is divisible by g1. Then, the convolutional interleaving is separately performed on the g1 data streams to obtain g1 data streams obtained through the convolutional interleaving. In this case, g1 is not equal to g. In other words, a quantity g of input data streams before the concatenated interleaving may be the same as or different from a quantity g1 of output data streams obtained by performing concatenated interleaving on the input data streams. This is specifically subject to an actual application scenario, and is not limited herein.

Further, before the second FEC encoding is performed on the m first data streams, the convolutional interleaving may be further performed on the m first data streams. The following describes a possible implementation of the foregoing convolutional interleaving.

A convolutional interleaver that performs convolutional interleaving includes r delay lines, each delay line includes a different quantity of storage units, a delay line having a smallest quantity of storage units includes 0 storage units, a difference between quantities of storage units of every two adjacent delay lines is Q, and r is an integer greater than 1. Each storage unit is configured to store d bits. Bits in each lane data stream are sequentially input into the r delay lines based on sequence numbers of the r delay lines, and d bits are input into and output from each delay line for a single time. r*d consecutive bits in a data stream output through the convolutional interleaving include the d bits output from each delay line, Q is an integer greater than or equal to 1, and d is an integer greater than or equal to 1. For example, the r delay lines respectively include 0 storage units, Q storage units, 2Q storage units, ..., and (r-1)Q storage units, and each storage unit is configured to store the d bits. In this case, the r delay lines respectively correspond to r delay values, and the delay values include 0 bits, Q×d bits, 2Q×d bits, ..., and (r-1)Q×d bits. A larger quantity of bits included in the delay value of the delay line indicates a longer delay (also referred to as a latency) caused by the delay line on the data stream. It should be understood that, when the delay line includes no storage unit, a delay caused by the delay line is 0 bits, in other words, transparent transmission without a delay is performed.

The following describes a specific structure of the convolutional interleaver with reference to the accompanying drawings. As shown in FIG. 7(a), quantities of storage units in the r delay lines decrease in order of the sequence numbers of the r delay lines. To be specific, a delay line 0 has (r-1)Q storage units, there is a decrease of Q storage units for each delay line sequentially, and a delay line r-1 has 0 storage units. As shown in FIG. 7(b), quantities of storage units in the r delay lines increase in order of the sequence numbers of the r delay lines. To be specific, a delay line 0 has 0 storage units, there is an increase of Q storage units for each delay line sequentially, and a delay line r-1 has (r-1)Q storage units.

It should be noted that, at a same moment, input and output switches (switches) of the convolutional interleaver are in a same delay line. After d bits are input into and output from a current delay line for a single time, positions of the switches are updated to a next delay line, to ensure that the bits in the input data stream of the convolutional interleaver are sequentially input into the r delay lines based on the sequence numbers of the r delay lines, and the r × d consecutive bits in the input data stream of the convolutional interleaver include the d bits output from each delay line. A specific data read/write operation performed by the convolutional interleaver is as follows: d bits are read from a storage unit that is closest to an output port and that is in the current delay line. d bits stored in each storage unit in the current delay line are transferred to a next storage unit. Next, d bits are written into a storage unit that is closest to an input port and that is in the current delay line. Then, updating to a next delay line is performed, and the foregoing operations are repeated. The rest can be deduced by analogy.

It should be understood that when same parameters r, Q, and d are used, convolutional interleaving processing in FIG. 7(a) and convolutional interleaving processing in FIG. 7(b) are inverse operations of each other. In other words, when the transmitter processing module uses a convolutional interleaving structure shown in FIG. 7(a), a structure shown in FIG. 7(b) is used for convolutional de-interleaving corresponding to a receiver processing module that corresponds to the transmitter processing module. Similarly, when the transmitter processing module uses a convolutional interleaving structure shown in FIG. 7(b), a structure shown in FIG. 7(a) is used for convolutional de-interleaving corresponding to a receiver processing module that corresponds to the transmitter processing module. It should be noted that, in some scenarios, KP4 is used for the outer-code encoding, a bit length of one symbol of KP4 is 10, and an integer multiple of 10 is selected as d, so that hardware implementation complexity of the overall concatenated solution can be low.

It should be noted that, in this application, positive integers P and F are selected, to cause a value of a baud rate of the modulated symbol data stream to be an integer multiple of a reference clock (reference clock) frequency. This simplifies implementation of clock extraction and clock synchronization of the receiver, implements fast phase locking, and achieves low PLL complexity and low jitter. It should be understood that a specific value of the reference clock frequency is not limited in this application. For example, the value may be an Ethernet common reference clock (Ethernet common reference clock) frequency. In an example, the value of the baud rate of the modulated symbol data stream is an integer multiple of 156.25M. It should be further understood that a specific error range may be accepted in actual application. For example, the value of the baud rate of the modulated symbol data stream is the integer multiple of 156.25M plus or minus V (ppm), where V may be 20, 50, or 100.

Further, the positive integers P and F are selected, to cause P to be a multiple of an inner code information length K. In this case, the receiver processing module performs codeword combination block synchronization of received data (that is, synchronization of a sequence of H = N × b - F bits, which is also referred to as boundary discovery of b codewords). In other words, according to the data processing method provided in this application material, synchronization of a receiver convolutional de-interleaver can be ensured while inner codeword synchronization of the receiver processing module is implemented. The following describes value requirements on P and F in detail.

Considering an 800GbE scenario, the transmitter device performs outer-code encoding on to-be-transmitted 800GbE service data streams by using a KP4 RS (544,514) code to obtain data streams with a total rate of 850 Gbps, performs PMA processing, and sends processed data streams to the transmitter processing module through an attachment unit interface 800GAUI. The transmitter processing module performs first data processing including the inner-code encoding on a plurality of first data streams, to obtain the m second data streams, where a total rate of the m second data streams is $850 \times \frac{b \times N - F}{b \times K}$ Gbps. The second data processing including PAM4 modulation is performed on the second data streams to obtain four modulated symbol streams, where a baud rate of each of the four modulated symbol streams is $\frac{850}{2 \times 4} \times \frac{b \times N - F}{b \times K}$ Gbaud, and baud herein represents a rate of modulated symbols transmitted per second.

It should be noted that in a 1.6TbE scenario, the transmitter device performs outer-code encoding on to-be-transmitted 1.6TbE service data streams by using a KP4 RS (544,514) code to obtain data streams with a total rate of 1.7 Tbps, performs PMA processing, and sends processed data streams to the transmitter processing module through an attachment unit interface AUI. The transmitter processing module obtains eight PAM4 modulated symbol streams by performing second FEC encoding, first data processing, and second data processing, where a baud rate of each of the eight PAM4 modulated symbol streams is $\frac{1700}{2 \times 8} \times \frac{b \times N - F}{b \times K}$ Gbaud. It should be noted that, when the modulation in the second data processing may not be the PAM4 modulation, and may be, for example, PAM8 modulation, eight PAM8 modulated symbol streams are obtained, where a baud rate of each of the eight PAM8 modulated symbol streams is $\frac{1700}{3 \times 8} \times \frac{b \times N - F}{b \times K}$ Gbaud.

It is assumed that the reference clock frequency is φ MHz. The following uses the 800GbE scenario as an example for description. A value of the baud rate of each of the four PAM4 modulated symbol streams is an integer multiple of the Ethernet common reference clock frequency, where $\frac{850}{2 \times 4} \times \frac{b \times N - F}{b \times K} G = a \times \varphi M$, N is a code length of the inner code, K is the information bit length of the inner code, and a is a positive integer. Herein, G represents 10^9, and M represents 10^6. In this case, the implementation of the clock extraction and the clock synchronization of the receiver is simple, the fast phase locking can be implemented, and the low PLL complexity and the low jitter are achieved. One Ethernet common reference clock frequency is 156.25 MHz.

It should be noted that a parameter combination N, K, P, and F used in the foregoing 800GbE scenario may be used in a higher-rate scenario, for example, the 1.6TbE scenario. For example, when the eight PAM4 modulated symbol streams are used for 1.6TbE, $\frac{1700}{2 \times 8} \times \frac{b \times N - F}{b \times K} G = \tilde{a} \times \varphi M$, where an integer ã used for 1.6TbE is equal to the integer a in the 800GbE scenario.

Further, frame synchronization of data at the receiver needs to be performed by using a sliding window of bits, where the window is of a data block size of b * N - F codeword combination blocks. The data block window is padded with F punctured bits, so that the data block size of the data window changes to b * N. Then, b syndromes are calculated in second FEC code lengths N in the data window, to determine a codeword synchronization status at the receiver based on values of b syndromes in one or more windows.

Further, when the transmitter processing module uses the concatenated interleaving including the convolutional interleaving, to ensure convolutional de-interleaving synchronization during the codeword combination block synchronization, for the receiver processing module, a start position of each codeword combination block (b × N - F bits) needs to correspond to a start position that is of switches and in which input and output switches (input and output switches) of the convolutional de-interleaver are located, which is usually a topmost position (topmost position), for example, a position of the delay line 0 shown in FIG. 7(a) and FIG. 7(b).

FIG. 19 is another schematic flowchart of a data processing method according to an embodiment of this application. It should be understood that the data processing method is applied to a receiver. For example, the data processing method may be specifically implemented by the receiver processing module 04 shown in FIG. 2 or the receiver device 05 shown in FIG. 3.

401: Perform third data processing on received Y modulated symbol streams to obtain m fourth data streams.

It should be understood that the Y modulated symbol streams are from the transmitter processing module 02 shown in FIG. 2 or the transmitter device 01 shown in FIG. 3. For a feature and a generation manner of the modulated symbol stream, refer to the related descriptions in the embodiment shown in FIG. 18. Details are not described herein again. The receiver processing module 04 or the receiver device 05 performs third data processing including demodulation on the Y modulated symbol streams to obtain the m fourth data streams, where the third data processing performed by the receiver processing module 04 or the receiver device 05 is an inverse operation of second data processing performed by the transmitter processing module 02 or the transmitter device 01.

402: Separately perform frame synchronization on the m fourth data streams.

The receiver processing module 04 or the receiver device 05 may perform a frame synchronization operation on each fourth data stream, to determine boundaries (boundaries) of each frame (b × N - F bits) in the fourth data stream, so as to obtain boundaries of an inner codeword, that is, implement inner codeword synchronization. After the codeword synchronization is completed, switch positions of concatenated convolutional de-interleaving are set to a topmost position, to complete synchronization of a convolutional de-interleaver, that is, complete an overall data stream processing synchronization process at the receiver.

It should be understood that, after completing the frame synchronization, the receiver processing module 04 or the receiver device 05 further performs fourth data processing on the m fourth data streams. The fourth data processing may include inverse operations of first data processing and second FEC encoding that are performed by the transmitter processing module 02 or the transmitter device 01. For example, the inverse operation of the second FEC encoding is inner-code decoding (second FEC decoding). Specific implementations of the inverse operations are not described one by one herein again.

The following uses a specific application scenario as an example to describe operations performed by the transmitter processing module 02 and the receiver processing module 04.

The transmitter processing module 02 separately performs inner-code encoding on first data streams obtained through outer-code encoding, to obtain m second data streams. Then, F bits are punctured from each of the m second data streams at a periodicity of b * N bits, that is, the first data processing is performed to obtain m third data streams. The second data processing including PAM4 modulation is performed on the m third data streams, to obtain the Y modulated symbol streams. For an 800GbE service scenario, Y=4, and for a 1.6TbE service scenario, Y=8. In this application material, the 800GbE service scenario is used as an example to describe the data processing method, and the data processing method may be simply extended to the 1.6TbE service scenario. A specific implementation of the data processing method in the 1.6TbE service scenario is known to a person of ordinary skill in the art. Details are not described herein.

The receiver processing module 04 performs third data processing on the received Y modulated symbol streams to obtain the m fourth data streams, where the third data processing is the inverse operation of the second data processing, and includes PAM4 demodulation. Then, punctured bits at corresponding positions are re-padded to positions of the F bits punctured by the transmitter processing module 02, and the inner codeword synchronization is performed on b × N bits obtained by padding the F bits, to obtain boundaries of a codeword combination block of b × N - F bits in the fourth data stream, that is, a codeword combination block. Then, the fourth data processing is performed on the m fourth data streams. The fourth data processing may include the inverse operations of the first data processing and the second FEC encoding that are performed by the transmitter processing module 02 or the transmitter device 01.

It should be noted that, before performing inner-code decoding, the receiver processing module 04 needs to determine the boundaries of the inner codeword, in other words, needs to perform inner codeword combination block synchronization. It should be further noted that, before performing convolutional de-interleaving, the receiver processing module 04 needs to determine positions of input and output switches in the convolutional de-interleaving, in other words, needs to perform convolutional de-interleaving synchronization. Based on the foregoing descriptions, that the receiver processing module 04 implements the codeword combination block synchronization of received data is equal to implementation of both the inner codeword synchronization and the convolutional de-interleaving synchronization, and no other operations need to be designed for concatenated de-interleaving synchronization. This simplifies a synchronization process of the receiver, and achieves low complexity.

The following uses a specific inner-code encoding scheme as an example to describe possible values of P and F. An FEC code with an information length K=120 bits and a codeword length N=128 bits is used for the inner-code encoding. In a possible implementation, it is considered that the FEC code with the information length K=120 bits and the codeword length N=128 bits is used for an inner code. For example, Hamming (128,120) is used. In another possible implementation, as shown in FIG. 9, to-be-encoded 120-bit data is represented as B[119:0], bitwise exclusive OR is performed on every two consecutive bits of the to-be-encoded 120-bit data to obtain 1-bit data C[i], and 60-bit data is obtained in total, and is represented as C[59:0], where C[i]=B[2*i]^B[2*i+1], and $0 \leq i \leq 59$. Then, C[59:0] is used as information data to perform Hamming (68,60) encoding to obtain 8-bit parity data, and the 8-bit parity data is represented as P[7:0]. Finally, a total of 128 bits: B[119:0] and P[7:0] are concatenated into an output of the inner-code encoding, and the output is represented as D[127:0]. D[119:0] is from B[119:0], and D[127:120] is from P[7:0]. In some actual scenarios, a Hamming Hamming (68,60) code is also referred to as an extended Hamming Extended Hamming (68,60) code, and is obtained by shortening an extended Hamming Extended Hamming (128,120) code by 60 bits. It should be noted that a single extended Hamming code and a double extended Hamming code in this application are also referred to as Hamming Hamming codes for short.

Considering the 800GbE scenario, the transmitter device performs outer-code encoding on to-be-transmitted 800GbE service data streams by using a KP4 RS (544,514) code to obtain data streams with a total rate of 850 Gbps, performs PMA processing, and sends processed data streams to the transmitter processing module through an attachment unit interface 800GAUI. The transmitter processing module processes m first data streams according to the method shown in FIG. 18 to obtain four PAM4 modulated symbol streams, where a baud rate of each of the four PAM4 modulated symbol streams is $\frac{850}{2 \times 4} \times \frac{b \times N - F}{b \times K}$ Gbaud, and baud herein represents a rate of modulated symbols transmitted per second. It is assumed that a value $\frac{850}{2 \times 4} \times \frac{b \times N - F}{b \times K}$ Gbaud of the baud rate is an integer multiple of an Ethernet common reference clock frequency 156.25 MHz, that is, $\frac{850}{2 \times 4} \times \frac{b \times N - F}{b \times K} G = 156.25 \times aM$, where a is a positive integer. It can be learned that $a = 680 \times \frac{b \times N - F}{b \times K}$, and is an integer. In this case, implementation of clock extraction and clock synchronization of the receiver is simple, fast phase locking can be implemented, and low PLL complexity and low jitter are achieved.

In this embodiment, K=120 and N=128. In this case, $F = \frac{(2176 - 3a) \times b}{17}$. In this embodiment, it is mainly considered that the baud rate is less than 114 GBaud.

Therefore, a value range of a is {720, 721, 722, 723, 724, 725, 726}. The following separately describes different values of a.

(1) When a=720, $F = \frac{(2176 - 3a) \times b}{17} = \frac{16 \times b}{17}$, and a corresponding baud rate is 112.5 GBaud. A value of b may be an integer multiple of 17, that is, b=17, 34, 51, .... A corresponding value of F may be obtained as a corresponding positive integer according to $F = \frac{16 * b}{17}$, that is, F=16, 32, 48, ....

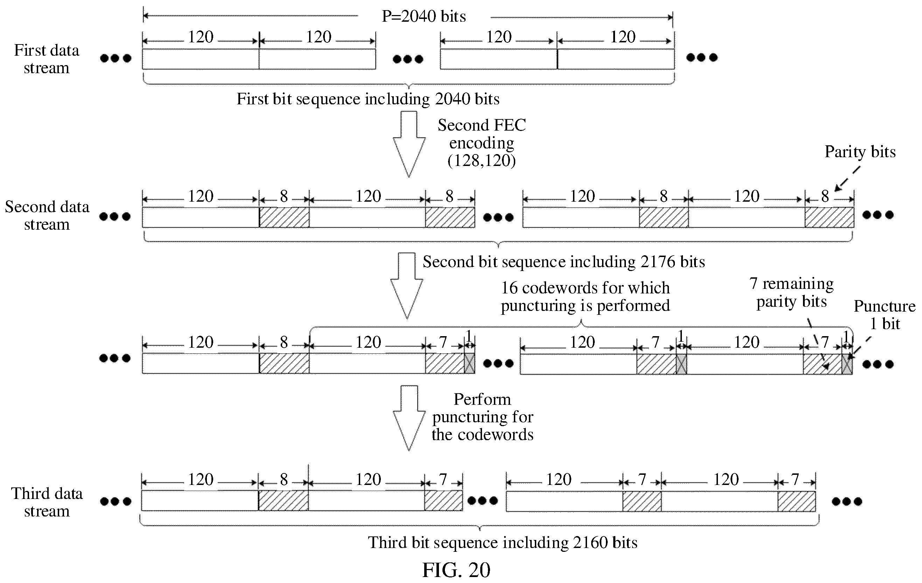

FIG. 20 is a diagram of another data stream structure change that is based on a data processing method according to an embodiment of this application. As shown in FIG. 20, b=17 and F=16. Each first data stream obtained through first FEC encoding (outer-code encoding) includes at least one first bit sequence, and the first bit sequence includes $P=b \times K=17 \times 120=2040$ bits. Second FEC (128,120) encoding is performed on the first data stream to obtain a second data stream, where a second bit sequence is obtained by performing second FEC encoding on each first bit sequence, and the second bit sequence includes b=17 codewords of a total of $N \times b = 128 \times 17 = 2176$ bits. Puncturing is performed for codewords in the second data stream to obtain a third data stream, where the third data stream includes a plurality of third bit sequences, punctured bits are located in last 16 128-bit groups in the second bit sequence, and are located at a last bit in the 128-bit groups, the third bit sequence is obtained by performing puncturing for codewords in each second bit sequence, and the third bit sequence includes $H = N \times b - F = 2160$ remaining bits other than the punctured bits in the second bit sequence.

(2) When a=721, $F = \frac{(2176 - 3a) \times b}{17} = \frac{13 \times b}{17}$, and a corresponding baud rate is 112.65625 GBaud. A value of b may be an integer multiple of 17, that is, b=17, 34, 51, .... A corresponding value of F may be obtained as a corresponding positive integer according to $F = \frac{13 * b}{17}$, that is, F=13, 26, 39, ....

(3) When a=722, $F = \frac{(2176 - 3a) \times b}{17} = \frac{10 \times b}{17}$, and a corresponding baud rate is 112.8125 GBaud. A value of b may be an integer multiple of 17, that is, b=17, 34, 51, .... A corresponding value of F may be obtained as a corresponding positive integer according to $F = \frac{10 \times b}{17}$, that is, F=10, 20, 30, ....

(4) When a=724, $F = \frac{(2176-3a) \times b}{17} = \frac{4 \times b}{17}$ , and a corresponding baud rate is 113.125 GBaud. A value of b may be an integer multiple of 17, that is, b=17, 34, 51, .... A corresponding value of F may be obtained as a corresponding positive integer according to $F = \frac{4 \times b}{17}$ , that is, F=4, 8, 12, ....

(5) When a=725, $F = \frac{(2176-3a) \times b}{17} = \frac{b}{17}$ , and a corresponding baud rate is 113.28125 GBaud. A value of b may be an integer multiple of 17, that is, b=17, 34, 51, .... A corresponding value of F may be obtained as a corresponding positive integer according to $F = \frac{b}{17}$ , that is, F=1, 2, 3, ....

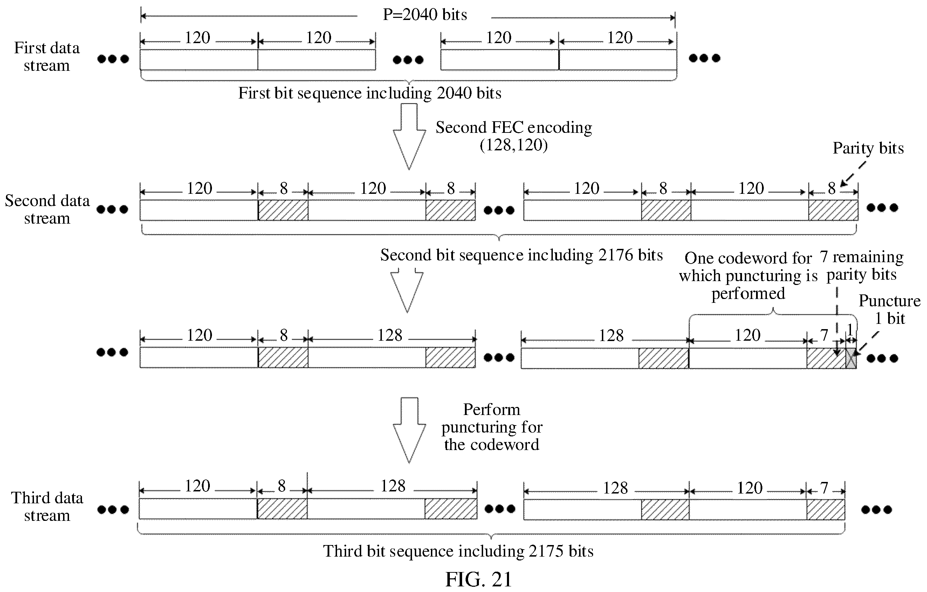

FIG. 21 is a diagram of another data stream structure change that is based on a data processing method according to an embodiment of this application. As shown in FIG. 21, b=17 and F=1. Each first data stream obtained through first FEC encoding (outer-code encoding) includes at least one first bit sequence, and the first bit sequence includes P=b×K=17×120=2040 bits. Second FEC (128,120) encoding is performed on the first data stream to obtain a second data stream, where the second data stream includes a plurality of second bit sequences. The second bit sequence is obtained by performing second FEC encoding on each first bit sequence, and the second bit sequence includes b=17 codewords of a total of N × b = 128 × 17 = 2176 bits. Puncturing is performed for codewords in the second data stream to obtain a third data stream, where the third data stream includes a plurality of third bit sequences. A punctured bit is located in a last 128-bit group in the second bit sequence, and is located at a last bit in the 128-bit group. The third bit sequence is obtained by performing puncturing for codewords in each second bit sequence, and the third bit sequence includes H = N × b - F = 2175 remaining bits other than the punctured bit in the second bit sequence.

It should be noted that, according to the data processing method applied to the transmitter shown in FIG. 18, correspondingly, the data processing method applied to the receiver includes the following steps. First, third data processing is performed on received Y modulated symbol streams to obtain m fourth data streams. For a feature and a generation manner of the modulated symbol stream, refer to the related descriptions in the embodiment shown in FIG. 18. Details are not described herein again. The third data processing including demodulation is performed on the Y modulated symbol streams to obtain the m fourth data streams, where the third data processing performed by the receiver is an inverse operation of the second data processing performed by the transmitter. Then, codeword combination block synchronization is performed on each fourth data stream.

It should be understood that, after completing codeword synchronization and/or frame synchronization, the receiver further performs fourth data processing on the m fourth data streams. The fourth data processing may be understood as an inverse operation of the first data processing and the second FEC encoding that are performed by the transmitter. For example, the inverse operation of the second FEC encoding is inner-code decoding (second FEC decoding). Specific implementations of the inverse operation are not described one by one herein again.

Based on the foregoing descriptions, a puncturing manner for a codeword combination block provided in this application is compatible with an existing convolutional interleaver design and an existing encoding design, and satisfies a requirement that the baud rate of the modulated symbol stream is the integer multiple of the reference clock. In this way, a PLL design is simple, receiver synchronization is simple, and the convolutional interleaver design is also simple, so that clock recovery complexity is reduced while maximum compatibility can be achieved on the whole.

The following describes data processing apparatuses provided in embodiments of this application.

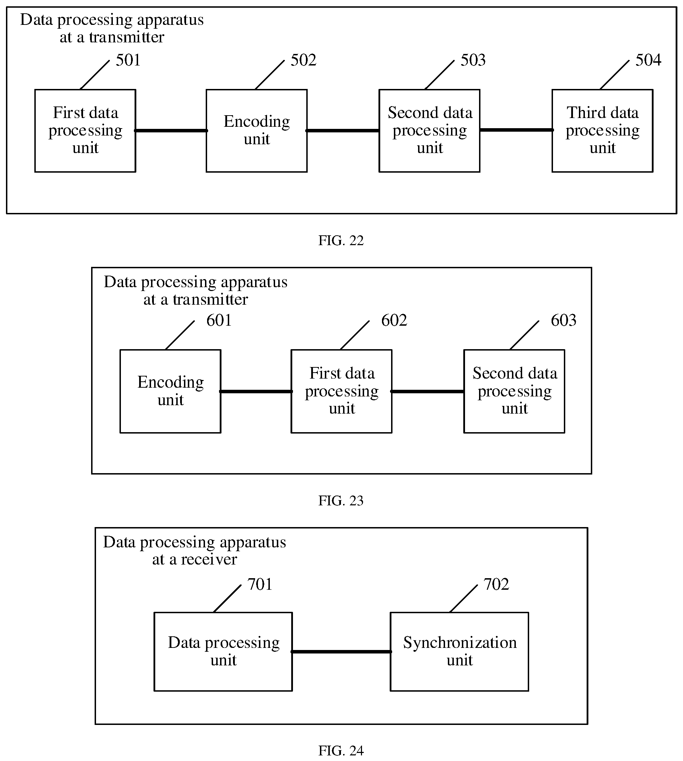

FIG. 22 is a diagram of a structure of a data processing apparatus used in a transmitter according to an embodiment of this application. As shown in FIG. 22, the data processing apparatus includes a first data processing unit 501, an encoding unit 502, a second data processing unit 503, and a third data processing unit 504. The first data processing unit 501 is configured to perform the operation of step 101 in the embodiment shown in FIG. 4. The encoding unit 502 is configured to perform the operation of step 102 in the embodiment shown in FIG. 4. The second data processing unit 503 is configured to perform the operation of step 103 in the embodiment shown in FIG. 4. The third data processing unit 504 is configured to perform the operation of step 104 in the embodiment shown in FIG. 4. For specific operations, refer to the related descriptions in the embodiment shown in FIG. 4. Details are not described herein again.

FIG. 23 is a diagram of another structure of a data processing apparatus used in a transmitter according to an embodiment of this application. As shown in FIG. 23, the data processing apparatus includes an encoding unit 601, a first data processing unit 602, and a second data processing unit 603. The encoding unit 601 is configured to perform the operation of step 301 in the embodiment shown in FIG. 18. The first data processing unit 602 is configured to perform the operation of step 302 in the embodiment shown in FIG. 18. The second data processing unit 603 is configured to perform the operation of step 303 in the embodiment shown in FIG. 18. For specific operations, refer to the related descriptions in the embodiment shown in FIG. 18. Details are not described herein again.

FIG. 24 is a diagram of a structure of a data processing apparatus used in a receiver according to an embodiment of this application. As shown in FIG. 24, the data processing apparatus includes a data processing unit 701 and a synchronization unit 702. The data processing unit 701 is configured to perform the operation of step 201 in the embodiment shown in FIG. 8 or the operation of step 401 in the embodiment shown in FIG. 19. The synchronization unit 702 is configured to perform the operation of step 202 in the embodiment shown in FIG. 8 or the operation of step 402 in the embodiment shown in FIG. 19. For specific operations, refer to the related descriptions in the embodiments shown in FIG. 8 and FIG. 19. Details are not described herein again.

It should be understood that the apparatuses provided in this application may alternatively be implemented in another manner. For example, division into the units in the foregoing apparatus is merely logical function division and may be other division in actual implementation. For example, a plurality of units or components may be combined or integrated into another system. In addition, functional units in embodiments of this application may be integrated into one processing unit, may be independent physical units, or two or more functional units may be integrated into one processing unit. The integrated unit may be implemented in a form of hardware, or may be implemented in a form of a software functional unit.

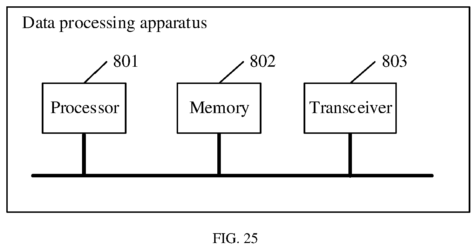

FIG. 25 is a diagram of another structure of a data processing apparatus according to an embodiment of this application. As shown in FIG. 25, the data processing apparatus includes a processor 801, a memory 802, and a transceiver 803. The processor 801, the memory 802, and the transceiver 803 are interconnected through lines. The memory 802 is configured to store program instructions and data. Specifically, the processor 801 is configured to perform a data processing operation, and the transceiver 803 is configured to perform data receiving and sending operations. In a possible implementation, the processor 801 may include the first data processing unit 501, the encoding unit 502, the second data processing unit 503, and the third data processing unit 504 shown in FIG. 22. In another possible implementation, the processor 801 may include the encoding unit 601, the first data processing unit 602, and the second data processing unit 603 shown in FIG. 23. In still another possible implementation, the processor 801 may include the data processing unit 701 and the synchronization unit 702 shown in FIG. 24.

It should be noted that the processor shown in FIG. 25 may be a general-purpose central processing unit (Central Processing Unit, CPU), a general-purpose processor, a digital signal processor (DSP), an application-specific integrated circuit (ASIC), a field programmable gate array (FPGA) or another programmable logic device, a transistor logic device, a hardware component, or any combination thereof. The memory shown in FIG. 25 may store an operating system and another application program. When the technical solutions provided in embodiments of this application are implemented by using software or firmware, program code used for implementing the technical solutions provided in embodiments of this application is stored in the memory and is executed by the processor. In an embodiment, the processor may include the memory inside. In another embodiment, the processor and the memory are two independent structures.

It may be clearly understood by a person skilled in the art that, for the purpose of convenient and brief description, for detailed working processes of the foregoing described system, apparatus, and unit, refer to corresponding processes in the foregoing method embodiments. Details are not described herein again.

A person of ordinary skill in the art may understand that all or some of the steps in the foregoing embodiments may be implemented by hardware or a program instructing related hardware. The program may be stored in a computer-readable storage medium. The storage medium mentioned above may be a read-only memory, a random access memory, or the like. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

When software is used to implement the functions, all or some of the method steps described in the foregoing embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk Solid State Disk (SSD)), or the like.

**Claims**

1. A data processing method, comprising:

   separately performing first data processing on m first data streams obtained through first forward error correction FEC encoding to obtain m second data streams, wherein m is an integer greater than 1, each of the second data streams comprises at least one first bit sequence, the first bit sequence comprises L bits, P bits in the first bit sequence are from the first data stream, W bits in the first bit sequence are padded virtual bits, W is an integer greater than or equal to 1, and L=P+W;
   separately performing second FEC encoding on the m second data streams to obtain m third data streams, wherein each of the third data streams comprises at least one second bit sequence, each second bit sequence is obtained by performing second FEC encoding on the first bit sequence, the second bit sequence comprises b codewords, b is an integer greater than 1, each of the codewords comprises N bits, N=K+S, K represents a quantity of information bits in the codeword, S represents a quantity of parity bits in the codeword, K is an integer greater than or equal to 1, S is an integer greater than or equal to 1, and L=K×b;
   separately performing second data processing on the m third data streams to obtain m fourth data streams, wherein each of the fourth data streams comprises at least one third bit sequence, each third bit sequence is obtained by performing second data processing on the second bit sequence, the third bit sequence comprises M remaining bits other than the virtual bits in the second bit sequence, and M=N×b-W; and
   performing third data processing on the m fourth data streams to obtain Y modulated symbol streams, wherein Y is an integer greater than or equal to 1, the third data processing comprises modulation, and a value of a baud rate of each of the modulated symbol streams is an integer multiple of a value of a reference clock frequency.

2. The method according to claim 1, wherein the value of the baud rate of each of the modulated symbol streams is an integer multiple of 156.25M.

3. The method according to claim 1 or 2, wherein b and W satisfy the following relationship: $\frac{425}{4} \times \frac{b \times N - W}{b \times K - W} G = a \times \varphi M$ , wherein a is an integer greater than or equal to 1, $\varphi$ represents the value of the reference clock frequency, G represents 10^9, and M represents 10^6.

4. The method according to any one of claims 1 to 3, wherein N=128 and K=120; and

   Hamming (128,120) is used for the second FEC encoding;
   or
   the second FEC encoding is performing bitwise exclusive OR on every two consecutive information bits in K=120 information bits to obtain 60 bits, and performing Hamming (68,60) encoding on the 60 bits to obtain S=8 parity bits, wherein a codeword with a length of 128 bits that is obtained through the second FEC encoding comprises the K=120 information bits and the S=8 parity bits.

5. The method according to claim 4, wherein W is an integer multiple of 10; and

   $$W=\frac{40 \times b}{23}, W=\frac{200 \times b}{47}, W=\frac{20 \times b}{3}, \text{ or } W=\frac{440 \times b}{49}.$$

6. The method according to any one of claims 1 to 3, wherein N=148 and K=140; and

   Hamming (148,140) is used for the second FEC encoding;
   or
   the second FEC encoding is performing bitwise exclusive OR on every two consecutive information bits in K=140 information bits to obtain 70 bits, and performing Hamming (78,70) encoding on the 70 bits to obtain S=8 parity bits, wherein a codeword with a length of 148 bits that is obtained through the second FEC encoding comprises the K=140 information bits and the S=8 parity bits.

7. The method according to claim 6, wherein W=4 × b,

   $$W=\frac{220 \times b}{21}, W=\frac{180 \times b}{11}, W=\frac{500 \times b}{23}, \text{ or } W=\frac{80 \times b}{3}.$$

8. The method according to any one of claims 1 to 7, wherein at least one of the following operations is further performed on the m first data streams: alignment marker lock, lane de-skew, and lane reorder.

9. The method according to claim 8, wherein convolutional interleaving has been performed on the m first data streams before the first data processing is performed, or convolutional interleaving has been performed on the m second data streams before the second FEC encoding is performed; and
   the convolutional interleaving comprises delaying an input data stream based on r delay lines, wherein r is an integer greater than 1, each delay line comprises a different quantity of storage units, a delay line having a smallest quantity of storage units comprises 0 storage units, a difference between quantities of storage units of every two adjacent delay lines is Q, each storage unit is configured to store d bits, bits in the input data stream are sequentially input into the r delay lines based on sequence numbers of the r delay lines, d bits are input into and output from each delay line for a single time, r*d consecutive bits in a data stream output through the convolutional interleaving comprise the d bits output from each delay line, Q is an integer greater than or equal to 1, and d is an integer multiple of 10.

10. The method according to claim 9, wherein input and output switches corresponding to the convolutional interleaving are in a 0th delay line each time f bits are output through the convolutional interleaving, wherein K×b is divisible by f; or input and output switches corresponding to the convolutional interleaving are in a 0th delay line each time f bits are output through the convolutional interleaving, wherein P is divisible by f.

11. The method according to claim 9, wherein r×d×c=K×b, and c is an integer greater than or equal to 1; or r×d×c=P, and c is an integer greater than or equal to 1.

12. A data processing method, comprising:

performing fourth data processing on received Y modulated symbol streams to obtain m fifth data streams, wherein each of the fifth data streams is obtained through demodulation, Y is an integer greater than or equal to 1, the Y modulated symbol streams are obtained by performing third data processing on m fourth data streams, the third data processing comprises modulation, the m fourth data streams are obtained by separately performing second data processing on m third data streams, the m third data streams are obtained by separately performing second forward error correction FEC encoding on m second data streams, the m second data streams are obtained by separately performing first data processing on m first data streams obtained through first FEC encoding, and m is an integer greater than 1, wherein each of the second data streams comprises at least one first bit sequence, the first bit sequence comprises L bits, P bits in the first bit sequence are from the first data stream, W bits in the first bit sequence are padded virtual bits, W is an integer greater than or equal to 1, and L=P+W; each of the third data streams comprises at least one second bit sequence, each second bit sequence is obtained by performing second FEC encoding on the first bit sequence, the second bit sequence comprises b codewords, b is an integer greater than 1, each of the codewords comprises N bits, N=K+S, K represents a quantity of information bits in the codeword, S represents a quantity of parity bits in the codeword, K is an integer greater than or equal to 1, S is an integer greater than or equal to 1, and L=K×b; each of the fourth data streams comprises at least one third bit sequence, each third bit sequence is obtained by performing second data processing on the second bit sequence, the third bit sequence comprises M remaining bits other than the virtual bits in the second bit sequence, and M=N×b-W; and a value of a baud rate of each of the modulated symbol streams is an integer multiple of a value of a reference clock frequency; and separately performing frame synchronization on the m fifth data streams.

13. A data processing method, comprising:

separately performing second FEC encoding on m first data streams obtained through first forward error correction FEC encoding to obtain m second data streams, wherein m is an integer greater than 1, the first data stream comprises at least one first bit sequence, the second data stream comprises at least one second bit sequence, each second bit sequence is obtained by performing second FEC encoding on the first bit sequence, the second bit sequence comprises b codewords, b is an integer greater than 1, each of the codewords comprises N bits, N=K+S, K represents a quantity of information bits in the codeword, S represents a quantity of parity bits in the codeword, K is an integer greater than or equal to 1, S is an integer greater than or equal to 1, the first bit sequence comprises K×b bits, and the second bit sequence comprises N×b bits; separately performing first data processing on the m second data streams to obtain m third data streams, wherein the third data stream comprises at least one third bit sequence, each third bit sequence is obtained by performing first data processing on the second bit sequence, the third bit sequence comprises H bits in the second bit sequence, H=N×b-F, and F is an integer greater than or equal to 1; and performing second data processing on the m third data streams to obtain Y modulated symbol streams, wherein Y is an integer greater than or equal to 1, the second data processing comprises modulation, and a value of a baud rate of each of the modulated symbol streams is an integer multiple of a value of a reference clock frequency.

14. The method according to claim 13, wherein the value of the baud rate of each of the modulated symbol streams is an integer multiple of 156.25M.

15. The method according to claim 13 or 14, wherein b and F satisfy the following relationship: $\frac{425}{4} \times \frac{b \times N - F}{b \times K} G = a \times \varphi M$, wherein a is an integer greater than or equal to 1, $\varphi$ represents the value of the reference clock frequency, G represents 10^9, and M represents 10^6.

16. The method according to any one of claims 13 to 15, wherein N=128 and K=120; and

   Hamming (128,120) is used for the second FEC encoding;
   or
   the second FEC encoding is performing bitwise exclusive OR on every two consecutive information bits in K=120 information bits to obtain 60 bits, and performing Hamming (68,60) encoding on the 60 bits to obtain S=8 parity bits, wherein a codeword with a length of 128 bits that is obtained through the second FEC encoding comprises the K=120 information bits and the S=8 parity bits.

17. The method according to claim 16, wherein $F = \frac{16 \times b}{17}$, $F = \frac{13 \times b}{17}$, $F = \frac{10 \times b}{17}$, $F = \frac{4 \times b}{17}$, or $F = \frac{b}{17}$.

18. The method according to any one of claims 13 to 17, wherein at least one of the following operations is further performed on the m first data streams before the second FEC encoding is performed: alignment marker lock, lane de-skew, and lane reorder.

19. The method according to claim 18, wherein convolutional interleaving has been performed on the m first data streams before the second FEC encoding is performed, and the convolutional interleaving comprises delaying an input data stream based on r delay lines, wherein r is an integer greater than **1,** each delay line comprises a different quantity of storage units, a delay line having a smallest quantity of storage units comprises 0 storage units, a difference between quantities of storage units of every two adjacent delay lines is Q, each storage unit is configured to store d bits, bits in the input data stream are sequentially input into the r delay lines based on sequence numbers of the r delay lines, d bits are input into and output from each delay line for a single time, r*d consecutive bits in a data stream output through the convolutional interleaving comprise the d bits output from each delay line, Q is an integer greater than or equal to 1, and d is an integer multiple of 10.

20. A data processing method, comprising:

   performing third data processing on received Y modulated symbol streams to obtain m fourth data streams, wherein each of the fourth data streams is obtained through demodulation, Y is an integer greater than or equal to 1, m is an integer greater than 1, the Y modulated symbol streams are obtained by performing second data processing on m third data streams, the second data processing comprises modulation, the m third data streams are obtained by separately performing first data processing on m second data streams, the m second data streams are obtained by separately performing second forward error correction FEC encoding on m first data streams, and the m first data streams are obtained through first FEC encoding, wherein the first data stream comprises at least one first bit sequence, the second data stream comprises at least one second bit sequence, each second bit sequence is obtained by performing second FEC encoding on the first bit sequence, the second bit sequence comprises b codewords, b is an integer greater than 1, each of the codewords comprises N bits, N=K+S, K represents a quantity of information bits in the codeword, S represents a quantity of parity bits in the codeword, K is an integer greater than or equal to 1, S is an integer greater than or equal to 1, the first bit sequence comprises K×b bits, and the second bit sequence comprises N×b bits; the third data stream comprises at least one third bit sequence, each third bit sequence is obtained by performing first data processing on the second bit sequence, the third bit sequence comprises H bits in the second bit sequence, H=N×b-F, and F is an integer greater than or equal to 1; and a value of a baud rate of each of the modulated symbol streams is an integer multiple of a value of a reference clock frequency; and
   separately performing frame synchronization on the m fourth data streams.

21. A data processing apparatus, comprising a first data processing unit, an encoding unit, a second data processing unit, and a third data processing unit, wherein

   the first data processing unit is configured to separately perform first data processing on m first data streams obtained through first forward error correction FEC encoding to obtain m second data streams, wherein m is an integer greater than 1, each of the second data streams comprises at least one first bit sequence, the first bit sequence comprises L bits, P bits in the first bit sequence are from the first data stream, W bits in the first bit sequence are padded virtual bits, W is an integer greater than or equal to 1, and L=P+W;

the encoding unit is configured to separately perform second FEC encoding on the m second data streams to obtain m third data streams, wherein each of the third data streams comprises at least one second bit sequence, each second bit sequence is obtained by performing second FEC encoding on the first bit sequence, the second bit sequence comprises b codewords, b is an integer greater than 1, each of the codewords comprises N bits, N=K+S, K represents a quantity of information bits in the codeword, S represents a quantity of parity bits in the codeword, K is an integer greater than or equal to 1, S is an integer greater than or equal to 1, and L=K×b;

the second data processing unit is configured to separately perform second data processing on the m third data streams to obtain m fourth data streams, wherein each of the fourth data streams comprises at least one third bit sequence, each third bit sequence is obtained by performing second data processing on the second bit sequence, the third bit sequence comprises M remaining bits other than the virtual bits in the second bit sequence, and M=N×b-W; and

the third data processing unit is configured to perform third data processing on the m fourth data streams to obtain Y modulated symbol streams, wherein Y is an integer greater than or equal to 1, the third data processing comprises modulation, and a value of a baud rate of each of the modulated symbol streams is an integer multiple of a value of a reference clock frequency.

22. The data processing apparatus according to claim 21, wherein the value of the baud rate of each of the modulated symbol streams is an integer multiple of 156.25M.

23. The data processing apparatus according to claim 21 or 22, wherein b and W satisfy the following relationship: $\frac{425}{4} \times \frac{b \times N - W}{b \times K - W} G = a \times \varphi M$, wherein a is an integer greater than or equal to 1, $\varphi$ represents the value of the reference clock frequency, G represents 10^9, and M represents 10^6.

24. The data processing apparatus according to any one of claims 21 to 23, wherein N=128 and K=120; and

Hamming (128,120) is used for the second FEC encoding;
or
the second FEC encoding is performing bitwise exclusive OR on every two consecutive information bits in K=120 information bits to obtain 60 bits, and performing Hamming (68,60) encoding on the 60 bits to obtain S=8 parity bits, wherein a codeword with a length of 128 bits that is obtained through the second FEC encoding comprises the K=120 information bits and the S=8 parity bits.

25. The data processing apparatus according to claim 24, wherein W is an integer multiple of 10; and $W=\frac{40 \times b}{23}$, $W=\frac{200 \times b}{47}$, $W=\frac{20 \times b}{3}$, or $W=\frac{440 \times b}{49}$ .

26. The data processing apparatus according to any one of claims 21 to 23, wherein N=148 and K=140; and

Hamming (148,140) is used for the second FEC encoding;
or
the second FEC encoding is performing bitwise exclusive OR on every two consecutive information bits in K=140 information bits to obtain 70 bits, and performing Hamming (78,70) encoding on the 70 bits to obtain S=8 parity bits, wherein a codeword with a length of 148 bits that is obtained through the second FEC encoding comprises the K=140 information bits and the S=8 parity bits.

27. The data processing apparatus according to claim 26, wherein
$W=4 \times b$, $W=\frac{220 \times b}{21}$, $W=\frac{180 \times b}{11}$, $W=\frac{500 \times b}{23}$ , or 3

28. The data processing apparatus according to any one of claims 21 to 27, wherein at least one of the following operations is further performed on the m first data streams: alignment marker lock, lane deskew, and lane reorder.

29. The data processing apparatus according to claim 28, wherein convolutional interleaving has been performed on the m first data streams before the first data processing is performed, or convolutional interleaving has been performed on the m second data streams before the second FEC encoding is performed; and
the convolutional interleaving comprises delaying an input data stream based on r delay lines, wherein r is an integer greater than **1,** each delay line comprises a different quantity of storage units, a delay line having a smallest quantity of storage units comprises 0 storage units, a difference between quantities of storage units of every two adjacent delay lines is Q, each storage unit is configured to store d bits, bits in the input data stream are sequentially input into the r delay lines based on sequence numbers of the r delay lines, d bits are input into and output from each delay line for a single time, r*d consecutive bits in a data stream output through the convolutional interleaving comprise the d bits output from each delay line, Q is an integer greater than or equal to **1,** and d is an integer multiple of 10.

30. The data processing apparatus according to claim 29, wherein input and output switches corresponding to the convolutional interleaving are in a 0<sup>th</sup> delay line each time f bits are output through the convolutional interleaving, wherein K×b is divisible by f; or
input and output switches corresponding to the convolutional interleaving are in a 0<sup>th</sup> delay line each time f bits are output through the convolutional interleaving, wherein P is divisible by f.

31. The data processing apparatus according to claim 29, wherein r×d×c=K×b, and c is an integer greater than or equal to 1; or
r×d×c=P, and c is an integer greater than or equal to 1.

32. A data processing apparatus, comprising a data processing unit and a synchronization unit, wherein

the data processing unit is configured to perform fourth data processing on received Y modulated symbol streams to obtain m fifth data streams, wherein each of the fifth data streams is obtained through demodulation, Y is an integer greater than or equal to **1,** the Y modulated symbol streams are obtained by performing third data processing on m fourth data streams, the third data processing comprises modulation, the m fourth data streams are obtained by separately performing second data processing on m third data streams, the m third data streams are obtained by separately performing second forward error correction FEC encoding on m second data streams, the m second data streams are obtained by separately performing first data processing on m first data streams obtained through first FEC encoding, and m is an integer greater than 1, wherein each of the second data streams comprises at least one first bit sequence, the first bit sequence comprises L bits, P bits in the first bit sequence are from the first data stream, W bits in the first bit sequence are padded virtual bits, W is an integer greater than or equal to **1,** and L=P+W; each of the third data streams comprises at least one second bit sequence, each second bit sequence is obtained by performing second FEC encoding on the first bit sequence, the second bit sequence comprises b codewords, b is an integer greater than **1,** each of the codewords comprises N bits, N=K+S, K represents a quantity of information bits in the codeword, S represents a quantity of parity bits in the codeword, K is an integer greater than or equal to 1, S is an integer greater than or equal to **1,** and L=K×b; each of the fourth data streams comprises at least one third bit sequence, each third bit sequence is obtained by performing second data processing on the second bit sequence, the third bit sequence comprises M remaining bits other than the virtual bits in the second bit sequence, and M=N×b-W; and a value of a baud rate of each of the modulated symbol streams is an integer multiple of a value of a reference clock frequency; and the synchronization unit is configured to separately perform frame synchronization on the m fifth data streams.

33. A data processing apparatus, comprising an encoding unit, a first data processing unit, and a second data processing unit, wherein

the encoding unit is configured to separately perform second FEC encoding on m first data streams obtained through first forward error correction FEC encoding to obtain m second data streams, wherein m is an integer greater than **1,** the first data stream comprises at least one first bit sequence, the second data stream comprises at least one second bit sequence, each second bit sequence is obtained by performing second FEC encoding on the first bit sequence, the second bit sequence comprises b codewords, b is an integer greater than 1, each of the codewords comprises N bits, N=K+S, K represents a quantity of information bits in the codeword, S represents a quantity of parity bits in the codeword, K is an integer greater than or equal to 1, S is an integer greater than or equal to 1, the first bit sequence comprises K×b bits, and the second bit sequence comprises N×b bits; the first data processing unit is configured to separately perform first data processing on the m second data streams to obtain m third data streams, wherein the third data stream comprises at least one third bit sequence, each third bit sequence is obtained by performing first data processing on the second bit sequence, the third bit sequence comprises H bits in the second bit sequence, H=N×b-F, and F is an integer greater than or equal to 1; and

the second data processing unit is configured to perform second data processing on the m third data streams to obtain Y modulated symbol streams, wherein Y is an integer greater than or equal to 1, the second data processing comprises modulation, and a value of a baud rate of each of the modulated symbol streams is an integer multiple of a value of a reference clock frequency.

34. The data processing apparatus according to claim 33, wherein the value of the baud rate of each of the modulated symbol streams is an integer multiple of 156.25M.

35. The data processing apparatus according to claim 33 or 34, wherein b and F satisfy the following relationship: $\frac{425}{4} \times \frac{b \times N - F}{b \times K} G = a \times \varphi M$ , wherein a is an integer greater than or equal to 1, φ represents the value of the reference clock frequency, G represents 10^9, and M represents 10^6.

36. The data processing apparatus according to any one of claims 33 to 35, wherein N=128 and K=120; and

Hamming (128,120) is used for the second FEC encoding;
or
the second FEC encoding is performing bitwise exclusive OR on every two consecutive information bits in K=120 information bits to obtain 60 bits, and performing Hamming (68,60) encoding on the 60 bits to obtain S=8 parity bits, wherein a codeword with a length of 128 bits that is obtained through the second FEC encoding comprises the K=120 information bits and the S=8 parity bits.

37. The data processing apparatus according to claim 35, wherein
$$F = \frac{16 \times b}{17}, \ F = \frac{13 \times b}{17}, \ F = \frac{10 \times b}{17}, \ F = \frac{4 \times b}{17} \ , \ \text{or}$$
$$F = \frac{b}{17} \ .$$

38. The data processing apparatus according to any one of claims 33 to 37, wherein at least one of the following operations is further performed on the m first data streams before the second FEC encoding is performed: alignment marker lock, lane de-skew, and lane reorder.

39. The data processing apparatus according to claim 38, wherein convolutional interleaving has been performed on the m first data streams before the second FEC encoding is performed, and the convolutional interleaving comprises delaying an input data stream based on r delay lines, wherein r is an integer greater than 1, each delay line comprises a different quantity of storage units, a delay line having a smallest quantity of storage units comprises 0 storage units, a difference between quantities of storage units of every two adjacent delay lines is Q, each storage unit is configured to store d bits, bits in the input data stream are sequentially input into the r delay lines based on sequence numbers of the r delay lines, d bits are input into and output from each delay line for a single time, r*d consecutive bits in a data stream output through the convolutional interleaving comprise the d bits output from each delay line, Q is an integer greater than or equal to 1, and d is an integer multiple of 10.

40. A data processing apparatus, comprising a data processing unit and a synchronization unit, wherein

the data processing unit is configured to perform third data processing on received Y modulated symbol streams to obtain m fourth data streams, wherein each of the fourth data streams is obtained through demodulation, Y is an integer greater than or equal to 1, m is an integer greater than 1, the Y modulated symbol streams are obtained by performing second data processing on m third data streams, the second data processing comprises modulation, the m third data streams are obtained by separately performing first data processing on m second data streams, the m second data streams are obtained by separately performing second forward error correction FEC encoding on m first data streams, and the m first data streams are obtained through first FEC encoding, wherein the first data stream comprises at least one first bit sequence, the second data stream comprises at least one second bit sequence, each second bit sequence is obtained by performing second FEC encoding on the first bit sequence, the second bit sequence comprises b codewords, b is an integer greater than 1, each of the codewords comprises N bits, N=K+S, K represents a quantity of information bits in the codeword, S represents a quantity of parity bits in the codeword, K is an integer greater than or equal to 1, S is an integer greater than or equal to 1, the first bit sequence comprises K×b bits, and the second bit sequence comprises N×b bits; the third data stream comprises at least one third bit sequence, each third bit sequence is obtained by performing first data processing on the second bit sequence, the third bit sequence comprises H bits in the second bit sequence, H=N×b-F, and F is an integer greater than or equal to 1; and a value of a baud rate of each of the modulated symbol streams is an integer multiple of a value of a reference clock frequency; and

the synchronization unit is configured to separately perform frame synchronization on the m fourth data streams.

| Transmitter device 01 | Attachment unit interface AUI | Transmitter processing module 02 | Channel transmission medium 03 | Receiver processing module 04 | Attachment unit interface AUI | Receiver device 05 |

FIG. 1

FIG. 2

FIG. 3

| Separately perform first data processing on m first data streams to obtain m second data streams | 101 |

| Separately perform second FEC encoding on the m second data streams to obtain m third data streams | 102 |

| Separately perform second data processing on the m third data streams to obtain m fourth data streams | 103 |

| Perform third data processing on the m fourth data streams to obtain Y modulated symbol streams | 104 |

FIG. 4

FIG. 5(a)

FIG. 5(b)

First data stream ●●●

Insert W virtual bits

Second data stream ●●●

First bit sequence including P+W bits

Virtual bits

Second FEC encoding (N,K)

N bits

Virtual bits

Parity bits

Third data stream ●●●

Second bit sequence including N×b bits

Delete the W virtual bits

Parity bits

Fourth data stream ●●●

Third bit sequence including N×b–W bits

FIG. 6

Delay line 0

d bits

(r–1)Q

Delay line 1

(r–2)Q

Delay line r–3

2Q

Delay line r–2

Delay line r–1

Q

FIG. 7(a)

Delay line 0

Delay line 1

d bits

Q

Delay line 2

2Q

Delay line r–2

(r–2)Q

Delay line r–1

(r–1)Q

FIG. 7(b)

Perform fourth data processing on received Y modulated symbol streams to obtain m fifth data streams  ⟋ 201

Separately perform frame synchronization on the m fifth data streams  ⟋ 202

FIG. 8

B[119:0]

B[119:0] ► B[2*i]^B[2*i+1] | C[59:0] ► Hamming (68,60) | P[7:0] ► D[127:0]

FIG. 9

FIG. 10

EP 4 625 856 A1

FIG. 11

46

FIG. 12

P=340

First data
stream

Insert 20 virtual bits

Virtual bits

120    120    100    20

Second data
stream

First bit sequence including 360 bits

Second FEC
encoding
(128,120)

Virtual bits    Parity bits

120    8    120    8    100    20    8

Third data
stream

Second bit sequence including 384 bits

Delete the 20 virtual bits

Parity bits

120    8    120    8    100    8

Fourth data
stream

Third bit sequence including 364 bits

FIG. 13

First data
stream

P=340

Insert 20 virtual bits

Second data
stream

120    110    10    110    10

First bit sequence including 360 bits    Virtual bits

Second FEC
encoding
(128,120)

Parity bits

Third data
stream

120    8    110    10  8    110    10  8

Second bit sequence including 384 bits

Delete the 20 virtual bits

Parity bits

Fourth data
stream

120    8    110    8    110    8

Third bit sequence including 364 bits

FIG. 14

B[139:0] → B[2*i]^B[2*i+1] → C[69:0] → Hamming (78,70) → P[7:0]

B[139:0]

D[147:0]

FIG. 15

FIG. 16

EP 4 625 856 A1

First data stream ••• | P=680 | •••

Insert 20 virtual bits

Second data stream ••• | 140 | 140 | 140 | 130 | 10 | 130 | 10 | •••

First bit sequence including 700 bits        Virtual bits

Second FEC encoding
(148,140)

Parity bits

Third data stream ••• | 140 | 8 | 140 | 8 | 140 | 8 | 130 | 10 | 8 | 130 | 10 | 8 | •••

Second bit sequence including 740 bits

Delete the 20 virtual bits

Parity bits

Fourth data stream ••• | 140 | 8 | 140 | 8 | 140 | 8 | 130 | 8 | 130 | 8 | •••

Third bit sequence including 720 bits

FIG. 17

Separately perform second FEC encoding on m first data streams to obtain m second data streams ⟋ 301

Separately perform first data processing on the m second data streams to obtain m third data streams ⟋ 302

Perform second data processing on the m third data streams to obtain Y modulated symbol streams ⟋ 303

FIG. 18

Perform third data processing on received Y modulated symbol streams to obtain m fourth data streams ⟋ 401

Separately perform frame synchronization on the m fourth data streams ⟋ 402

FIG. 19

FIG. 20

EP 4 625 856 A1

P=2040 bits

First data stream ••• | 120 | 120 | ••• | 120 | 120 | •••

First bit sequence including 2040 bits

⬇ Second FEC encoding (128,120)

Parity bits

Second data stream ••• | 120 | 8 | 120 | 8 | ••• | 120 | 8 | 120 | 8 | •••

Second bit sequence including 2176 bits

One codeword for which puncturing is performed | 7 remaining parity bits

Puncture 1 bit

••• | 120 | 8 | 128 | ••• | 128 | 120 | 7 | 1 | •••

⬇ Perform puncturing for the codeword

Third data stream ••• | 120 | 8 | 128 | ••• | 128 | 120 | 7 | •••

Third bit sequence including 2175 bits

FIG. 21

Data processing apparatus
at a transmitter

/ 501

First data
processing
unit

/ 502

Encoding
unit

/ 503

Second data
processing
unit

/ 504

Third data
processing
unit

FIG. 22

Data processing apparatus
at a transmitter

/ 601

Encoding
unit

/ 602

First data
processing
unit

/ 603

Second data
processing
unit

FIG. 23

Data processing apparatus
at a receiver

/ 701

Data processing
unit

/ 702

Synchronization
unit

FIG. 24

Data processing apparatus

801

802

803

Processor

Memory

Transceiver

FIG. 25

## INTERNATIONAL SEARCH REPORT

| International application No. |
| --- |
| **PCT/CN2023/137824** |

| A. | CLASSIFICATION OF SUBJECT MATTER |
| --- | --- |
| | H04L 1/00(2006.01)i |

According to International Patent Classification (IPC) or to both national classification and IPC

| B. | FIELDS SEARCHED |
| --- | --- |

Minimum documentation searched (classification system followed by classification symbols)

IPC:H04L,H04W,H04Q

Documentation searched other than minimum documentation to the extent that such documents are included in the fields searched

Electronic data base consulted during the international search (name of data base and, where practicable, search terms used)

3GPP, CNTXT, WPABSC, WPABS, DWPI, ENTXTC, ENTXT: 前向纠错, 编码, 数据流, 比特序列, 填充, 虚拟比特, 码字, 校验, 调制符号, 波特率, 汉明; FEC, forward error correction, encoding, data stream, bit sequence, padding, virtual bits, codeword, check, modulation symbol, baud rate, hamming

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | WO 2020177596 A1 (HUAWEI TECHNOLOGIES CO., LTD.) 10 September 2020 (2020-09-10)<br>claims 1-38 | 1-40 |
| A | WO 2017141125 A1 (TYCO ELECTRONICS SUBSEA COMMUNICATIONS LLC) 24 August 2017 (2017-08-24)<br>entire document | 1-40 |
| A | US 2020177307 A1 (CIENA CORP.) 04 June 2020 (2020-06-04)<br>entire document | 1-40 |
| A | CN 115118383 A (MARVELL ASIA PTE, LTD.) 27 September 2022 (2022-09-27)<br>entire document | 1-40 |
| A | HUAWEI et al. "LDPC coded bits interleaving and mapping to modulation symbols for HARQ retransmissions"<br>*3GPP TSG RAN WG1 Meeting #91 R1-1720763*, 01 December 2017 (2017-12-01),<br>pages 1-8 | 1-40 |

☐ Further documents are listed in the continuation of Box C.　　☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **04 February 2024** | **08 February 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/137824**

| Patent document cited in search report | | | Publication date (day/month/year) | Patent family member(s) | | | Publication date (day/month/year) |
|---|---|---|---|---|---|---|---|
| WO | 2020177596 | A1 | 10 September 2020 | US | 2021399831 | A1 | 23 December 2021 |
| | | | | EP | 3930221 | A1 | 29 December 2021 |
| | | | | CN | 111669250 | A | 15 September 2020 |
| WO | 2017141125 | A1 | 24 August 2017 | US | 9634803 | B1 | 25 April 2017 |
| US | 2020177307 | A1 | 04 June 2020 | | None | | |
| CN | 115118383 | A | 27 September 2022 | US | 2022302928 | A1 | 22 September 2022 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211591696